(19) Europäisches Patentamt
European Patent Office
Office européen des brevets

(11) **EP 4 160 121 B1**

(12) **EUROPEAN PATENT SPECIFICATION**

(45) Date of publication and mention
of the grant of the patent:
**20.12.2023 Bulletin 2023/51**

(21) Application number: **22196281.4**

(22) Date of filing: **19.09.2022**

(51) International Patent Classification (IPC):
***F25B 49/02*** *(2006.01)*

(52) Cooperative Patent Classification (CPC):
**F25B 49/022;** F25B 2339/047; F25B 2400/061;
F25B 2500/19; F25B 2600/0251; F25B 2600/0253;
Y02B 30/70

(54) **EFFICIENCY CONTROL ALGORITHM FOR A CASCADE SYSTEM OF HEAT PUMPS**

EFFIZIENZREGELUNGSALGORITHMUS FÜR EINE KASKADENWÄRMEPUMPE

ALGORITHME DE CONTRÔLE DE EFFICACITÉ POUR UNE POMPE À CHALEUR EN CASCADE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.09.2021 IT 202100024935**

(43) Date of publication of application:
**05.04.2023 Bulletin 2023/14**

(73) Proprietor: **Ariston S.p.A.**
**60044 Fabriano (AN) (IT)**

(72) Inventor: **DIGRAZIA, Alessio**
**20900 Monza (MB) (IT)**

(74) Representative: **Premru, Rok**
**Mar.Bre S.R.L.,**
**2, Via San Filippo**
**60044 Fabriano (IT)**

(56) References cited:
**WO-A1-2020/165992    JP-A- 2013 231 542
JP-B2- 4 999 529**

**Description**

The present invention relates to a method for operating a system comprising a group of refrigeration machines.

The object of the present invention is a method for the management of a group of refrigeration machines intended to the refrigeration and heating of a common heat transfer fluid. In particular, such heat transfer fluid is a liquid. Still in particular, such heat transfer fluid is used for the conditioning of environments and/or for the production of domestic hot water (**ACS**).

Such group of refrigeration machines and regulation apparatuses connected is hereinafter called system **HP.S.**

In heating mode, the system **HP.S** may also comprise conventional fuel and/or electrical heat generators (boilers) and/or (electrical resistances) that, they too, according to suitable variants of the invention, may be managed in coordination with the group of refrigeration machines.

The refrigeration machines and the electrical heat generators may indifferently be supplied, in whole or in part, by mains or self-produced electrical energy.

The refrigeration machines to which the invention refers apply the refrigerant fluid compression refrigeration cycle and use rotary compressors of a suitable type to operate at highly variable rotational frequency **FR** adapting to the power required at the time.

Rotary compressors mean those in which the volume of one or more compression chambers varies by means of impellers, screws, spirals, blades or rotating lobes or other and where the operating torque is substantially invariant during rotation unlike reciprocating piston compressors where the compression is characterised by operating torques and discontinuous thrust steps that do not allow significant deviations from the design frequency **FR.**

The displacement **cc** of a rotary compressor **Cp** is herein defined as the maximum value reached in the suction step by the one or more compression chambers. Since, hereinafter, the management methods of the group of refrigeration machines both according to the prior art and according to the invention will be examined in heating mode, the machines themselves will almost always be called heat pumps **HP** instead of refrigeration machines albeit implying no limitation in general scope since all the considerations that will be described except for the heating of domestic water or other bodies, are applied to these machines both in heating and cooling mode. In other words, the term *refrigerating machine* generically means a machine that applies a refrigeration cycle capable of producing cooling power to the evaporator and heating to the condenser. The same generic meaning is herein attributed to the term refrigeration system.

A refrigerating machine is sometimes also intended as a refrigeration system equipped with several compressors, not necessarily operating all at the same time. The method herein described concerns the individual compressors with which the refrigeration units are equipped; it will be understood that such compressors are placed in parallel with each other, i.e. the heat transfer fluids with which their condensers and evaporators exchange heat cross these in parallel branches.

The problem of the optimal management of a group of heat generators in order to maximise its efficiency has been addressed for some time. E.g. for a utility powered by traditional boilers, which have the maximum efficiency at the maximum load, it is preferred to have several boilers of different maximum power and to activate the minimum number necessary to satisfy the service from time to time. In such way the engaged boilers operate close to their maximum load and therefore to the maximum efficiency. On the other hand, the criterion is different if condensing boilers are used whose maximum efficiency does not coincide at all with the operation at maximum power; this is a state in which condensation is limited.

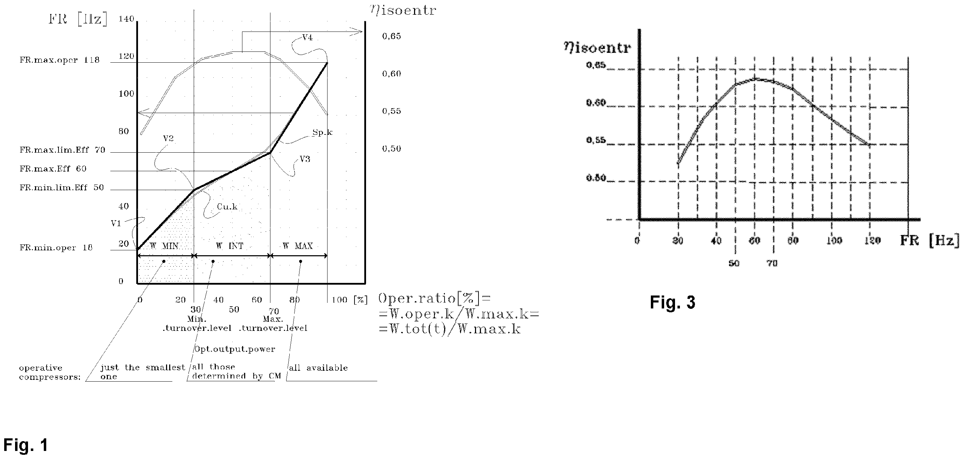

The selection criteria is more complex when heating is by **HP** using rotary compressors: these compressors may operate at a rotation frequency **FR** and corresponding operating output power **W.oper** very variable and the efficiency **Eff** of a generic compressor (see Fig 1) is close to the maximum **Eff.max** within a rather wide frequency range **FR** that goes from a lower limit value **FR.min.lim.Eff** to an upper limit value **FR.max.lim.Eff.** Within these limits, the efficiency **Eff** is very close to the actual **Eff.max**; the latter is obtained at a frequency **FR.max.Eff** substantially intermediate among said frequency limits **FR.min.lim.Eff** and **FR.max.lim.Eff.**

The choice of the value and position of these limits is up to the man skilled in the art who determines them based on the efficiency change rate **Eff** with the frequency **FR,** at the preferred or possible regulation accuracy, at the frequency he wishes to apply the method described or other elements. For example, the narrower the accepted margin between the frequency limits **FR.min.lim.Eff** and **FR.max.lim.Eff,** the greater the average efficiency of the system, but the more frequently the compressors will have to be alternated.

Of course, but with much lower efficiency **Eff,** the compressor, if necessary, may operate at frequencies **FR** below **FR.min.min.Eff** up to a minimum operating limit value **FR.min.oper** or above **FR.max.lim.Eff** up to a value of maximum operating limit **FR.max.oper.** The operating limits **FR.min.oper FR.max.oper** are the frequency limits, usually indicated by the manufacturer, outside which the compressor may not operate for technical reasons.

It is clear that there is no advantage in engaging the minimum number **k** of compressors **Cp** necessary to meet the load **W.req(t)** required at the moment **t** by the utility, by setting each of them to their maximum power **W.max.k**; an exuberant subgroup **Gn** of **n** compressors **Cp** (with $1 \leq n \leq m$) must be engaged instead, from a group **Gm** of all the available **m** compressors; such that these **n** compressors **Cp** may operate at medium load within their lower and upper limits **FR.min.lim.Eff** and **FR.max.lim.Eff,** in conditions close to the optimal ones and thus with an operating power **W.oper** well below their maximum power **W.max.n.**

The number **N.Gn** of the subgroups **Gn** that may be constructed by combining **n** of the **m** compressors **Cp** (with $1 \leq \mathbf{n} \leq \mathbf{m}$) is

$$\mathbf{N.Gn} = \sum_{n=1}^{m}[m!/(n!\,(m-n)\,!].$$

**N.Gn** grows rapidly with **m** even if some subgroups **Gn** may be equivalent because using two or more compressors **Cp** of identical model.

According to the prior art, the number of compressors to be engaged to meet the load **W.req(t)** at the maximum efficiency, albeit with some variations from manufacturer to manufacturer, provides for the following general method:

- acquiring and storing representative tables of the efficiency curves of each of the **m** available compressors and of the powers that may be output as the frequency **FR** varies and possibly for various groups of operating conditions determined by the operating temperatures **T.evap** and **T.cond** at the evaporator and condenser;
- calculating, from these tables, the overall efficiency curve actually obtainable in all the possible **N.Gn** combinations of compressors at the current operating conditions;
- finally, among the **N.Gn** subgroups **Gn,** choosing the subgroup **Gn** of **n** compressors **Cp** meeting the current load **W.req(t)** with the maximum efficiency at the current operating conditions.

These methods provide results that take into account the diversity of the efficiency curves for the various compressors but are all more laborious the higher the number of compressors and their assortment, also taking into account the fact that the choice must be repeated every time the operating conditions differ from the previous ones in a manner deemed significant.

The difficulty of choice would be less by providing all compressors of the same model and size in order to activate one or more without the need of choosing among them but, in order to adapt with flexibly and efficiency to even marked variations of the load **W.req(t),** it would be necessary to have many relatively low power compressors; a much more expensive option than the arrangement of a smaller number of compressors of increasing rated power according to the aforementioned criteria always in use for boilers.

As for the known methods of operation of the **n** compressors chosen so as to deliver power at the maximum possible efficiency, they provide, in the simplest cases, that all are supplied at the same voltage **V** and frequency **FR** up to the more complex case of operation of each compressor in autonomous mode for both frequency **FR** and voltage **V.**

A management method aimed at optimising the efficiency of a group of heat pumps is for example described in the prior art document JP 2013 231542 A in which a controller comprises information on the efficiency of the group based on the number of active compressors of said heat pumps and where the switching of said compressors takes place on the basis of an actual rotation frequency, which may also be obtained from said stored information.

The main object of the present invention is to obviate the aforementioned complexity of the criterion for choosing the compressors and to provide more alternatives in the operation of the **n** compressors to be engaged among the available **m** so as to output power in conditions at least close to those of maximum possible efficiency.

A further purpose of the present invention, at least for some variants and some working conditions, is to obtain efficiency results equal to those obtainable with some more complex methods of the prior art.

A further object at least for some variants of the present invention is to carry out a continuous surveillance on the possible groups of **n** compressors which may be engaged among the **m** available ones.

A further object, at least for some variants of the present invention and certain steps of the methods described, is to define common operating limits for all the **n** compressors to be engaged as regards the maximum and minimum rotation frequency.

A further object, at least for some variants of the present invention is to make a short term forecast of the power requests by the utility

A further object, at least for some variants of the present invention is to coordinate the supply of thermal power between the main utility and any secondary ones.

A further object, at least for some variants of the present invention is to carry out a turnover of the active compressors according to additional criteria to those of maximum operating efficiency.

A further object, at least for some variants of the present invention is to manage the compressors at customised frequencies selected with suitable criteria.

This and other objects, which shall appear clear hereinafter, are achieved with a control method according to the present invention as defined in claim 1.

Other objects may also be achieved through the additional features of the dependent claims.

Further features of the present invention shall be better highlighted by the following description of some preferred embodiments, in accordance with the patent claims and illustrated, by way of a non-limiting example, in the accompanying drawing tables, in which:

fig. 1.   shows a graph relating to a group of one or more compressors simultaneously operating with, on the abscissas, the percentages of power output with respect to the maximum output and on the ordinates, the rotation frequencies of the compressors and the corresponding fraction of power output on the maximum deliverable; a curve and a broken line that approximate it show the relation between the rotation frequency of the compressors; three operating zones are highlighted: the central one where the compressors operate in conditions of optimal efficiency and intermediate power; the lower and upper one in conditions of lower efficiency and respectively of minimum and maximum power; the figure also shows the efficiency trend of the compressors according to their load fraction on the total deliverable load;

fig. 2.   shows the same graph of Figure 1 and with the same physical meaning but in addition there are shown the equations representing the three straight line segments of the aforementioned broken line;

fig. 3.   shows an isentropic efficiency diagram for a type of rotary compressor as a function of the rotation frequency of the same;

fig. 4.   shows a system **HP.S** adapted to be operated according to the innovative methods described;

fig. 5.   symbolically shows, with histograms, a first possible transit of a system **HP.S** from a first to a second state following a reduction in the required power;

fig. 6.   symbolically shows, again with histograms, a second possible transit of a system **HP.S** from a first to a second state following an increase in the sustainable power required by the pool of available heat pumps;

fig. 7.   symbolically shows, always by histograms, a third possible transit of a system **HP.S** from a first to a second state following an increase in the requested power not sustainable only by the pool of available heat pumps.

fig. 8.   shows the trend of the delivery temperature to the utilities when the available heat pumps are unable to meet all the thermal power required;

fig. 9.   shows, in the situation illustrated in Figure 8, the trend of the additional thermal power required and the contributions provided by more conventional fuel and/or electrical heat generators.

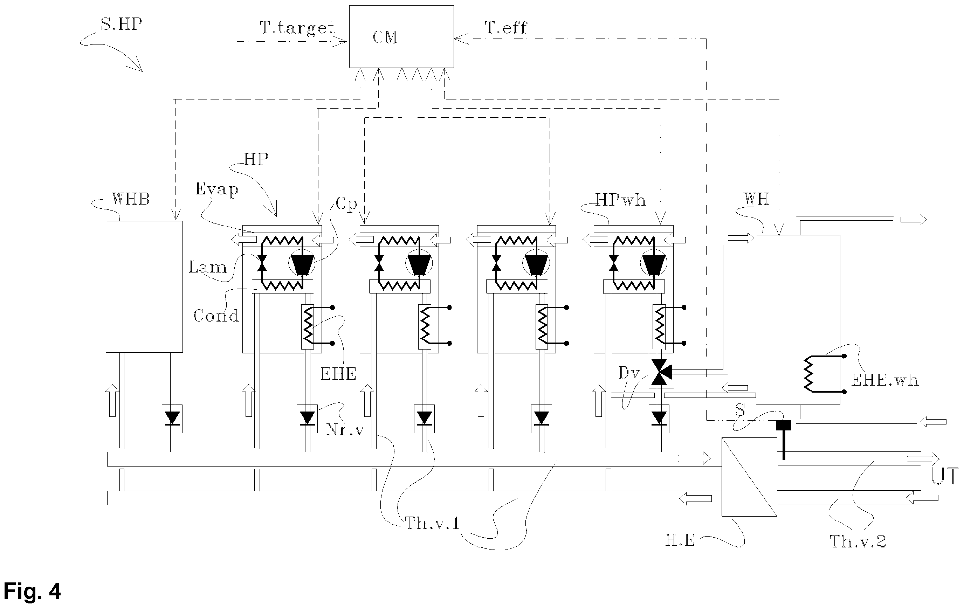

## • Composition of the system HP.S (Fig 4)

Figure 4 schematically shows the possible components of a heat pump system **HP.S** that may be managed according to the innovative methods described.

The system **HP.S** comprises a group of heat pumps **HP** in which a group **Gm** of **m** rotary compressors **Cp** with corresponding evaporator **Evap,** condenser **Cond,** lamination valve **Lam** is housed. As already mentioned, not necessarily each heat pump **HP** includes a single compressor **Cp** as shown instead in the diagram. In fact, the method herein described refers to the management of the individual compressors **Cp** which are expected to be managed independently from each other even in subgroups **Gn** of **n** compressors (with $1 \leq n \leq m$)

Each compressor **Cp** may comprise a starting device which limits the value of the inrush current, e.g. keeping the same at a frequency of 30Hz for at least 3 minutes. Each condenser **Cond** associated with a corresponding compressor **Cp** exchanges thermal power with a same primary heat transfer fluid **Th.v.1** which passes through the condensers **Cond** through corresponding branches of parallel pipes. Preferably, each of said branches of parallel pipes provides a non-return valve **Nr.v** or a motorised shut-off valve that blocks the flow of the primary heat transfer fluid **Th.v.1** through the condensers **Cond** associated with the currently inactive compressors

In particular, at least where it is technically possible and with the corresponding modifications of the plant scheme within the reach of the man skilled in the art, this primary heat transfer fluid **Th.v.1** may be the same heat transfer fluid circulating in the compressors; that is, the refrigerant fluid.

The thermal power generated (to cool or heat) is transmitted to the said utility **UT** (not drawn) which may, only by way of an example, consist of a room conditioning system (e.g. cooling, dehumidification, heating) or in domestic hot water or other substance or body adapted to absorb or release thermal energy.

The energy exchange preferably takes place indirectly through a heat exchanger **HE** between primary heat transfer fluid **Th.v.1** and a secondary heat transfer fluid **Th.v.2**

The primary heat transfer **Th.v.1** (if it is not the refrigerant fluid) and the secondary heat transfer fluid **Th.v.2** may be kept in circulation by circulation pumps not shown in the figure.

A sensor **S** placed on the delivery to the utility **UT** monitors the temperature **T.eff(t)** of the heat transfer fluid **Th.v.1** or, if present, **Th.v.2** in order to be able to compare it with the target temperature **T.target(t),** determined and reported according to techniques and criteria known by devices external to the system **S.HP,** at any time t.

The service to multiple different utilities is obviously possible only if the target temperature **T.target(t)** is compatible with the specific temperatures required by each of the utilities currently connected or if each individual utility may be served at different times. Especially if the main utility **UT** consists of room cooling or other bodies, one or more of said heat pumps **HP** may be a heat pump **HPwh** periodically dedicated only to the heating of additional utilities **UT.ult** (in particular hot water; even more particularly **DHW** domestic hot water) in bodies **WH** (in particular storage tanks **WH)** unrelated to the utility **UT.** For this purpose, the heat pumps **HPwh** are equipped at the outlet with a diverter valve **Dv** which may divert the heat transfer fluid **Th.v.1** towards said bodies **WH** either directly or through additional heat exchangers (not shown in Figure 4).

The system **HP.S** may further comprise a set of conventional heat generators consisting of one or more fuel boilers **WHB** and/or one or more electrical elements **EHE** adapted to heat the same heat transfer fluid **Th.v.1**, by the Joule effect, where said one or more electrical elements **EHE** are preferably arranged in series downstream of one or more condensers **Cond.** Further electrical elements **EHE.wh** may be provided in said bodies **WH.**

The cold well, that is the heat source to the evaporator **Evap,** is neither shown nor are known means for the inversion of the heat pumps **HP** in order to switch from heating mode to possible room cooling mode or vice versa.

A managing apparatus **CM (Cascade Manager),** comprising at least power supply, input/output communication, memory, calculation, user interface means and composed of one or more parts, even separate and located in various elements of the system **HP. S,** controls it, at least for the purposes of applying the methods described, by sending input and/or receiving return output. Further local checks, not shown, may be carried out for each body **WH** and/or boiler **WHB** and/or electrical resistance **EHE.**

The managing apparatus **CM** provides for a cascade management of the various compressors **Cp,** in the sense that one or more of them alternates in the operation according to manners that depend on the thermal power requirement of the moment but also depending on the previously active compressors.

The number **m** of all the rotary compressors **Cp** actually available in said group **Gm** and usable to serve the main utility **UT** may be lower than the number of compressors **Cp** actually installed and may vary for various reasons such as the fact that one or more of these compressors **Cp** may periodically be used to serve said additional utilities **UT.ult** or because they are compressors **Cp** that had been deactivated less than the time interval $\Delta$**t.riacc** which is prescribed between a switch-off and subsequent switch-on or for other reasons.

A possible flow meter (not shown) may measure the flow rate **G(t)** of the heat transfer fluid **Th.v.1** or **Th.v.2** whose temperature is monitored and transmit the value to the managing apparatus **CM.**

The **managing method,** that shall be now described, aimed at optimising the efficiency of the aforementioned system **HP.S** basically consists of a **selection method** for the compressors **Cp** to be activated to generate to generate the power **W.req(t)** at the maximum efficiency allowed by one or more of the compressors **Cp** of the group **Gm.** The **selection method** is flanked and followed by possible **operating methods** of the compressors **Cp** selected and activated by modulating the operating frequency **FR** thereof and also the deactivation with a request for further selection.

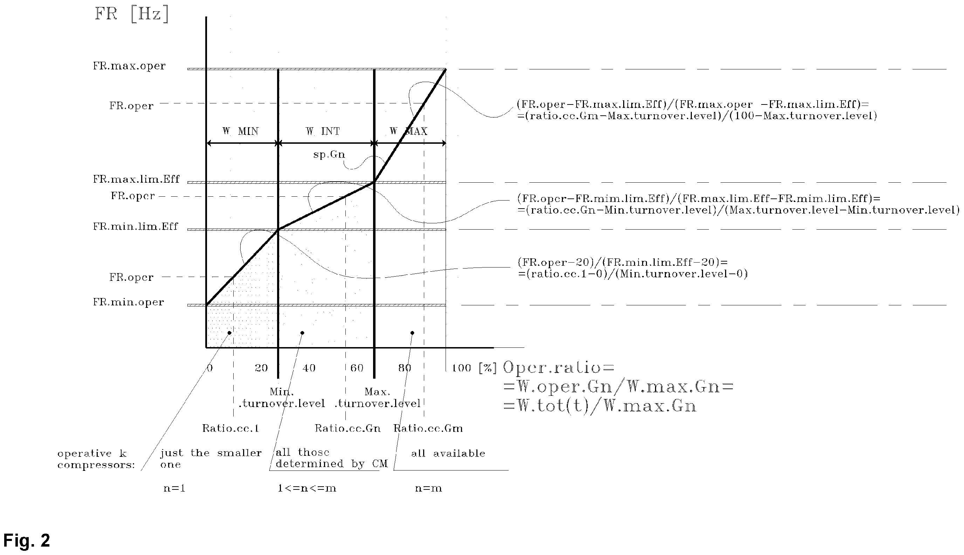

## • Power - frequency and power - efficiency graphs of Figures 1 and 2

The numerical values indicated in the graphs of Figures 1, 2 and 3, although capable of representing real situations, are intended only as exemplary and not limitative.

The graphs of Figures 1 and 2 have the same physical meaning and differ only for having some indications omitted in the one or in the other for greater readability than the others.

The graph of Figure 3 shows the isentropic efficiency $\eta$.**isoentr** of a rotary compressor. The isentropic efficiency $\eta$.**isoentr** is defined as the ratio between the real efficiency of a thermodynamic cycle and the corresponding theoretical maximum efficiency (i.e. with invariant entropy) under the same conditions at the evaporator and condenser. The curve shown is taken from experimental data relating to one of the types of rotary compressor in use in refrigeration machine systems (or heat pumps) **HP.S** such as those that may be managed according to the herein described methods. In general, the curve has the same value for all compressors of the same type and possibly of the same manufacturer, regardless of the displacement and of the rated powers and frequency. Graphs relating to other types of rotary compressor have the same trend characterised by having a limited zone of rotation frequencies, compared to the total allowed, where the curve has a maximum but contiguous values very close to the maximum. Such zone of maximum isentropic efficiency $\eta$.**isoentr** generally falls at the nominal power and frequency declared by the manufacturer. As for the nominal frequency, it is generally 50 or 60Hz.

The isentropic efficiency $\eta$.**isoentr** plotted in Figure 3 as a function of the operating frequency, has been transposed into the graph of Figure 1 as a function of the operating power fraction **Oper.**

The curve **cu.k** (see Figure 1) shows for a generic k-th of the **m** compressors **Cp** its specific relation between the fraction expressed as a percentage **Oper.ratio = W.oper.k/W.max.k,** where **W.oper.k** indicates the operating power output when the operating frequency **FR** varies and **W.max.k** indicates the maximum power deliverable by such generic k-th compressor **Cp.**

Also for any subgroup **Gn** of **n** of the **m** compressors **Cp** (with $1 \leq n \leq m$) it is then possible to define a specific curve **cu.Gn** which indicates the relation between an operating frequency **FR** common to all the compressors of the subgroup **Gn** and the corresponding and the corresponding ratio **Oper.ratio** = W.oper.Gn/W.max.Gn, where **W.oper.Gn** indicates the total operating power output by such subgroup **Gn** and **W.max.Gn** the total power that may be output by the same subgroup.

The entire group **Gm** may also be comprised among the subgroups **Gn,** therefore characterised by a specific curve **cu.Gm**

In conclusion, for a group **Gm** of **m** compressors **Cp** there are:

- **m** curves **cu.k** of the individual **m** compressors **Cp;**
- for every different possible combination of **n** of the **m** compressors **Cp** in subgroups **Gn** of **n** compressors **Cp,** the aforementioned **N.Gn** curves **cu.Gn;**
- for the entire group **Gm** of **m** compressors **Cp** a single curve **cu.Gm.**

The **N.Gn** curves **cu.Gn** would converge into a single one if the curves **cu.k** were all the same among each other, which strictly speaking occurs only for compressors **Cp** of the same type, size and even manufacturer. But, as mentioned above, it is highly preferred that at least for the size, that is, the power and the displacement, an adequate assortment of different compressors **Cp** is available, especially if a very variable load **W.req(t)** to be satisfied is provided. Other technical or commercial reasons may make it necessary or appropriate to include compressors of different types in the group **Gm,** a fact which makes the efficient use of all the compressors of the same group **Gm** more complex but still necessary. The **m** curves **cu.k** of the single **m** compressors **Cp** are at least summarily disclosed by the manufacturer while the **N.Gn** curves, curve **cu.Gn, cu.Gm** included, in principle are knowable only experimentally.

Figures 1 and 2 highlight the following particular points of the specific relation between the operating frequency **FR** and corresponding power ratio **Oper.ratio** of a k-th compressor **Cp** or common to a generic subgroup **Gn:**

- the predefined frequencies **FR.min.oper** and **FR.max.oper** within which the compressors **Cp** must operate in order not to suffer damage; correspond respectively to an operating power **w.oper.k** = 0 and **w.oper.k =W.max.k** (or, for a subgroup **Gn, w.oper.Gn** = 0 and **w.oper.Gn =W.max.Gn**) and therefore respectively of the ratios **Oper.ratio** equal to 0 and 100%;
- the discretionary frequencies **FR.min.lim.Eff** and **FR.max.lim.Eff,** within which the compressors **Cp** operate in conditions of efficiency deemed sufficiently close to the maximum and the corresponding power percentages on the maximum that may be respectively output **Min.turnover.level** and **Max.turnover.level;**
- the predefined maximum efficiency frequency **FR.max.Eff** comprised among the previous frequency limits **FR.min.lim.Eff** and **FR.max.lim.Eff** and the corresponding optimal output power ratio **Oper.ratio = Opt.output. power.**

In the limit ratios of **Oper.ratio = Min.turnover.level** and = **Max.turnover.level** the term "turnover" is used because, as the requested power varies, if the subgroup **Gn** of **n** selected compressors is forced to deliver a power **W.oper.Gn** such that **Oper.ratio = W.oper.Gn/W.max.Gn** exceeds these limits, very preferably provided that there are better alternatives, a turnover, i.e. an alternation of the compressors engaged with others of a different subgroup **Gn** that may generate the required power at levels closer to those of maximum efficiency.

It is a characteristic of all rotary compressors that the curve **cu.k** (such as the homologous **cu.Gn, cu.Gm**) is increasing with a first decreasing slope up to a minimum slope, at the operation at maximum efficiency, then increasing.

The curve **cu.k** may be replaced with good approximation by a broken line **sp.k** of three straight sections which have extremes at points **V1.k, V2.k, V3.k, V4.k** (and homologous points **V1, V2, V3, V4** for the general broken line **sp.Gm** of the curve **cu.Gm**) having **[FR - Oper.ratio]** respectively the pairs of parameters **[FR.min.oper - 0%], [FR.min.lim.Eff - Min.turnover.level], [FR.max.lim.Eff - Max.turnover.level], [FR.max.oper - 100%]** as coordinates.

Therefore a generic curve **cu.k** or **cu.Gn** or **cu.Gm** is identified and may be stored with only four pairs of parameters which respectively identify the broken lines **sp.k, sp.Gn, sp.Gm.**

If the curves **cu.k** of the various compressors **Cp** have functional characteristics that may be considered substantially equal or having negligible differences for the purposes of the invention, the same compressors **Cp** may be represented by a shared curve **cu.Gm** valid for all the **m** compressors **Cp.** In general, however, it must be considered that at least some of the curves **cu.k** may also be rather different from the others if the group **Gm** comprises some compressors of a rather different type from that of the others.

Figure 2 shows the representative formulas of the three sections of the broken line **sp.k** (that is, the equations of the corresponding straight line segments).

The graph is divided into three zones by these characteristic frequencies:

- a first **W MIN** where the compressors **Cp** operate at frequencies **FR** comprised between **FR.min.oper** and **FR.min.lim.Eff** lower than those of satisfactory efficiency and output low power;

- a second **W INT** where the compressors **Cp** are kept within the frequency limit **FR** comprised between **FR.min.lim.Eff,** and **FR.max.lim.Eff** which operate at satisfactory efficiency and output an intermediate power;
- a third **W MAX** where the compressors **Cp** are kept at frequencies **FR** higher than those of satisfactory efficiency but output high power.

In the extreme zones **W MIN** and **W MAX** the slope higher than that of the central zone **W INT** is a consequence of the fact that the efficiency of the set of one or more compressors is lower than in the central zone **W INT**.

It is desired to select a subgroup **Gn** which, in order to meet the power load **W.req(t)** required at the moment, may operate in the second zone **W INT** and among these the subgroup **Gn** which meets the condition by operating as close as possible to the frequency of maximum efficiency **FR.max.Eff.**

In fact, zone **W MIN** is operated only when the required power is so low that only one of the **m** available compressors **Cp** and at the minimum operating frequencies is sufficient (in general, the compressor of lowest power, as indicated in Figures 1 and 2) while zone **W MAX is** operated only when the requested power is so high that all the **m** compressors **Cp** of the group **Gm** are needed and at an operating frequency **FR** greater than that of maximum efficiency **Fr.max.Eff.**

## • Main acronyms used

For greater clarity of the acronyms used to designate the physical quantities used, the meaning of the following symbols is specified:

**cc** displacement of a generic compressor **Cp;**

**FR** rotation frequency of the compressors **Cp;**

**W** thermal power generated or required;

**m** total quantity of the available compressors **Cp;**

**n** a generic number of compressors **Cp** among the **m** available ($1 \leq n \leq m$);

**Gm** the group of compressors **Cp** comprising all the **m** compressors **Cp;**

**Gn** a generic subgroup comprising **n** of the **m** compressors **Cp;**

**SGn** a generic sub-assembly of a subgroup **Gn** comprising only compressors **Cp** of same type in terms of performance;

and of the following desinencies:

**".Gm"** physical quantity common to all the elements of the group **Gm;**

**".Gn"** physical quantity common to all the elements of a subgroup **Gn;**

**".SGn"** physical quantity common to all the elements of a sub-assembly **SGn;**

**".k"** specific physical quantity of the k-th of the **m** compressors **Cp;**

**"(t)"** physical quantity variable with the time **"t".**

The absence of desinencies indicates a generic physical quantity.

## • The selection method

The essential characteristics of the **selection method** for choosing within the group **Gm** of the **m** available compressors, the sub-group **Gn** of the **n** compressors **Cp** to be engaged in order to meet, with the maximum possible efficiency at the moment, the load **W.req(t)** required at the instant **t** by the utility **UT**.

The operating power **W.oper** actually output that meets the utility **UT** - namely, that is **W.oper = W.req(t)** - may be known from the delivery temperature control **T.eff(t)** that must be brought to coincide with **T.target(t).** In fact, the value of the load **W.req(t)** is in one-to-one correspondence with the value **T.target(t)** of the temperature requested by the same utility.

However, according to a preferred variant of the **selection method,** the direct determination of said load **W.req(t)** and operating power **W.oper** is not necessary, but only of other parameters connected thereto.

Once the **selection method** has chosen the subgroup **Gn** of the **n** compressors to be engaged, they are then regulated in frequency according to one or more of several possible **operating methods.**

The herein described **selection method** is based on the following assumptions which, although not exactly true, have proved to be acceptable in practice even if the compressors **Cp** are not of the same type

A common curve **cu.Gm,** simplified in a corresponding broken line **sp.Gm,** is considered as shared by all the compressors **Cp** of the group **Gm** even if these are of different type. More precisely, all such compressors **Cp** are supposed to:

- output an equal fraction **Oper.ratio** of power on the maximum at the same operating frequency **FR,**
- have the same efficiency at the same operating frequency **FR;**
- output a conventional maximum power **W.max.k\*** (where the value **W.max.k\*** is generally different from the actual value **W.max.k**) proportional to their displacement **cc.k** according to an equal proportionality ratio **R.W.cc** for each displacement **cc.k** and to which a value deemed suitable by the designer is assigned and preferably equal to the simple or weighted average with respect to the displacements **cc** of the actual ratios **W.max.k/cc.k** found for the compressors **Cp** belonging to the group **Gm:**
- able to operate within the same frequencies **FR.min.oper** and **FR.max.oper.**

Ultimately, it is assumed that all the **m** compressors **Cp** have identical characteristics except for their displacement. Consequently, in particular:

a) the power fractions on the maximum one that may be output **Min.turnover.level** and **Max.turnover.level** are obtained for identical frequency values **FR.min.lim.Eff** and **FR.max.lim.Eff**
b) the following relations are accepted as valid

$$\textbf{R.W.cc} = \textbf{W.max.k/cc.k} = \textbf{W.max.Gn/cc.Gn} = \textbf{W.max.Gm/cc.Gm}$$

although, strictly speaking, the following would be valid

$$\textbf{R.W.cc} = \textbf{W.max.k*/cc.k} = \textbf{W.max.Gn*/cc.Gn} = \textbf{W.max.Gm*/cc.Gm}$$

c) the ratio **Oper.ratio** is the same for every subgroup **Gn** at the same operating frequency **FR** i.e. there is:

$$\textbf{Oper.ratio} = \textbf{W.oper.k/W.max.k} = \textbf{W.oper.Gn/W.max.Gn} =$$

$$\textbf{W.oper.Gm/W.max.Gm}$$

and in particular **Oper.ratio = Opt.output.power** occurs at an equal max efficiency frequency; i.e.:

$$\textbf{FR.max.Eff.k} = \textbf{FR.max.Eff.Gn} = \textbf{FR.max.Eff.Gm.}$$

Consequently, any subgroup **Gn'** of total displacement **cc.Gn'** which generates a desired maximum power **W.max.Gn'** at an equal maximum frequency **FR.max.oper.Gn** and a lower power **W.oper.Gn** at a preferred lower frequency **FR.oper.Gn** (in particular the lower power output at the max efficiency **W.max.eff.Gn** at the frequency **FR** of max efficiency. **FR.max.Eff.Gn**) is considered as equivalent to another subgroup **Gn"** that has a total displacement **cc.Gn" = cc.Gn'** and although it may be its maximum actual power **W.max.Gn"** ≠ **W.max.Gn".**
Ultimately, during the application of the **selection method** all the **m** compressors **Cp** are considered as identical, except for a scale factor determined by their displacement **cc:** as the displacement **cc** varies, the maximum power that may be output **W.max** is considered to vary proportionally at the maximum common frequency **FR.max.oper.**
The correct criterion to meet a power load **W.req(t)** with the maximum efficiency would be that of choosing a subgroup **Gn** of compressors **Cp** such as to output a total power **W.oper.Gn = W.req(t)** when each k-th of the **n** compressors involved operates at a frequency **FR** the closest as possible to the maximum efficiency frequency **FR.max.Eff.k** thereof.
The application of such criterion would be complex because a compromise should be sought between the frequencies **FR** to be applied to each k-th of the n compressors **Cp.** Even simplifying the procedure with the hypothesis that all compressors **Cp** must be operated at the same frequency **FR,** which of all the possible subgroups **Gn** would meet the condition **W.oper.Gn = W.req(t)** at a frequency **FR** that better approximates to the individual frequencies **FR.max.Eff.k** should always be identified.
According to the **selection method** of the invention, instead:

a) according to possibly more alternative criteria that shall be described later, the ratio **Oper.ratio = Opt.output.pow-**

**er** is determined in the general broken line **sp.Gm** at which ratio each k-th compressor **Cp** should operate to function at maximum efficiency;

b) the reference displacement **cc.rif** which corresponds to a conventional maximum power **W.max' = W.req(t)** is determined;

c) the subgroup **Gn** of currently available compressors **Cp** is selected and activated, whose corresponding total displacement **cc.Gn** is as close as possible to **cc.rif / Opt.output.power.**

The terms *currently available compressors Cp,* specify that some of the compressors **Cp** may be preferably or necessarily not engageable for transitory technical reasons among which those that shall be described later or for the fact of being temporarily intented for other priority purposes.

If the **selection method** identifies two or more substantially identical subgroups **Gn,** as it may happen if the group **Gm** has several compressors **Cp** of the same size, the one that best responds to further advantageous criteria is chosen, of which a preferred list is given below.

The number **m** of compressors **Cp** chosen to equip the refrigeration unit (or heat pumps) system **HP.S** and their size must be such as to provide a total power **W.max.Gm** equal to the maximum power **W.req.max** that is deemed adequate; the maximum power considered as deliverable by each of the compressors **Cp** forming part of the group **Gm** is that actually output to its specific maximum operating frequency **FR.max.oper.**

In order to apply the **selection method** and the possible subsequent **operating methods** it is necessary that all the parameters stored in the said managing apparatus **CM** characterising each compressor **Cp** at least at the initial stage of the composition of the group **Gm** and every time such composition changes by substitution, addition, elimination of some compressor of the same group **Gm** are acquired.

Among the parameters characterising each k-th compressor **Cp** there are:

- the displacement **cc.k;**
- the coordinates of vertices **V1.k, V2.k, V3.k, V4.k** identifying the specific broken line **sp.k**
- the maximum power **W.max.k** generated at the maximum operating limit **FR.max.oper.k** (at standard temperature values at the evaporator **T.evap** and at the condenser **T.cond**)

and possibly some of the following data:

- the rated power **W.nom.k;**
- the rated frequency **FR FR.nom.k;**
- the type of compressor
- the number of operating hours that is then updated during the operation of the same compressor; this data is necessary for certain variants where the choice of the subgroup **Gn** of compressors takes it into account subordinately to the essential data;
- the time elapsed since the last switching off
- the fact that the compressor is or is not part of a heat pump **HPwh** having as priority task the service of said possible additional utilities **UT.ult** and that therefore risks becoming unavailable during the activation thereof forcing a new selection process.

According to the methods of the invention, it is preferred that the power supply voltage **V** is that of the mains both at start-up and throughout the operation, therefore all the deliverable powers by the compressors **Cp** are preferably considered as the rated mains voltage **V** only.

There may be several criteria to establish the identification parameters of the broken line **Sp.Gm:** either generic, predefined by the designer, or more relevant to the actual group of compressors **Cp** envisaged in the specific system **HP.S.** Generally valid default values are:

- **Min.turnover.level** comprised between 20% and 40%; preferably 30% for corresponding frequency **FR.min.lim.Eff** comprised between 40 and 55Hz; preferably 50Hz,
- **Max.turnover.level** comprised between 60% and 80%; preferably 70% for corresponding frequency **FR.max.lim.Eff** comprised between 65 and 80Hz; preferably 70Hz;
- for **Opt.output.power** and **FR.max.lim.Eff** intermediate values between **Min.turnover.level,** and **Max.turnover.level** and corresponding frequencies **FR.min.lim.Eff** and **FR.max.lim.Eff.**
- for the minimum and maximum operating frequency **FR.min.oper.k** and **FR.max.oper.k** the values 20 and 120Hz respectively

As an alternative to the assignment of predetermined values, these parameters may be assigned more accurate values derived with various criteria by the specific values of each of the **m** compressors **Cp;** e.g. by calculating:

- a common minimum operating limit **FR.min.oper** equal to the highest of the values recorded for each of the **m** compressors with **Oper.ratio** = 0% and a common maximum operating limit **FR.max.oper** equal to the lowest of the values recorded for each of the same **m** compressors with **Oper.ratio** = 100%;
- a common frequency **FR** of maximum efficiency **FR.max.Eff** equal to the simple or weighted average of the **FR.max.Eff.k** of the individual compressors;
- a common lower frequency limit of maximum efficiency **FR.min.lim.Eff** equal to **FR.max.Eff** - ΔFR.min where ΔFR.min is an initially predetermined value preferably equal to 10Hz but which, according to some variants, **FR.min.lim.Eff** may be replaced during operation by a higher; **FR.min.lim.Eff.var** so that the frequency range for an optimal efficiency is restricted;
- a common upper limit of maximum efficiency frequency **FR.max.lim.Eff** equal to **FR.max.Eff** + ΔFR.max where ΔFR.max is a predetermined value by the man skilled in the art and preferably equal to 10Hz.
- **Min.turnover.level** equal to the highest of the values recorded for each of the **m** compressors
- **Max.turnover.level** equal to the lowest of the values recorded for each of the **m** compressors
- **Opt.output.power** which is geometrically obtained from the coordinates of the points **V2** and **V3.**

From the stored data, the total displacement **cc.Gn** and the total maximum power **W.max.Gn** may be calculated for each subgroup **Gn** respectively equal to the sum of the displacements **cc.k** and of the maximum powers **W.max,k** of each k-th compressor **Cp** included in the same subgroup.

In the weighted averages, the *weight,* in its arithmetic meaning, is given by the displacements **cc.k** of the individual compressors.

The proportionality ratio **R.W.cc** between maximum power that may be output by the group **Gm** and its total displacement may also be predetermined by the manufacturer or derived from the parameters of the compressors **Cp;** preferably as a weighted average of the ratios between the maximum powers **W.max.k** and the relative displacements **cc.k.**

In the previous weighted averages, the *weight,* in its arithmetic meaning, is given by the displacements **cc.k** of the individual compressors.

The purpose of determining the operating limits **FR.min.oper** and **FR.max.oper** as defined above is to avoid that some compressor **Cp,** if they were then all operated at the same frequency **FR,** is led to operate at frequencies **FR** which are critical for it.

The purpose of determining the frequency limits **FR.min.lim.Eff** and **FR.max.lim.Eff** is of course to be able to choose the subgroup **Gn** that meets the load **W.req(t)** under the conditions closest to those of maximum efficiency.

The values of ΔFR.min and ΔFR.max that determine the extension of the operating interval between **FR.min.lim.Eff** and **FR.max.lim.Eff** are determined by the designer as a compromise between the maximization of efficiency and the limitation of the alternation of the activated compressors and may also be different for two identical systems **HP.** S intended for two different utilities **UT.**

The type of the k-th compressor may be deduced from the vertices **V1.k, V2.k, V3.k, V4.k** relating to its specific broken line **sp.k.**

The calculation of the previous parameters actually identifies the coordinates of the vertices **V1, V2, V3, V4** characterising the possible shared broken line **sp.Gm** with more relevance to the actual types of the available compressors than what a default broken line **sp.Gm** and based on a generic experience.

The previous calculations may be omitted if it is known that all the **m** compressors share the same broken line **sp.k.**

If **W.req(t)** ≤ **W.max.Gm,** i.e. if the maximum power **W.max.Gm** that may be output by all the compressors may meet the required load **W.req(t),** then for the choice of the subgroup **Gn** of compressors to be used to meet such load at moment **t** with the maximum possible efficiency there are at least two possible preferred alternative procedures.

### A first possible procedure for the selection

A **first selection procedure,** assumes the knowledge of the actual value of **W.req(t),** explicitly determinable at least as explained later or according to known alternative methods.

If **W.req(t)** ≤ **W.req.max,** the following steps are carried out.

a) the fraction **req.W.ratio** is calculated as the ratio between **W.req(t)** and **W.max.Gm:**

$$\textbf{req.W.ratio} = \textbf{W.req(t)} / \textbf{W.max.Gm}$$

where **req.W.ratio** is the power fraction that is required at moment t with respect to the total deliverable power **W.max.Gm.**

b) a reference displacement **cc.Rif** is calculated as the product of **req.W.ratio** for **cc.Gm:**

$$\text{cc.Rif} = \text{req.W.ratio} \cdot \text{cc.Gm}$$

c) the total displacement **cc.Gn** of all the possible subgroups **Gn** of **n** available compressors is calculated.

d) for every subgroup **Gn** the ratio **Ratio.cc.Gn = cc.Gn/cc.Rif** [%] is calculated.

e) it is started the subgroup **Gn** whose ratio **Ratio.cc.Gn** is closer to the value of maximum efficiency but, in case of multiple subgroups **Gn** that have equal or substantially equal ratios **Ratio.cc.Gn,** where the term "substantially" is defined by the manufacturer according to the desired regulation accuracy, the subgroup **Gn** is preferred which meets the aforementioned further discretional criteria such as for example those indicated below.

f) for every compressor **Cp** of the new subgroup **Gn,**

- if it was already part of the previous subgroup **Gn,** it is left on.
- if it was off, it is started up with criteria that avoid excessive inrush currents, for example not simultaneously with others and preferably by keeping it at a low frequency for a few minutes (e.g. for at least 3 minutes at a frequency of 30Hz) and then operated at the frequency as calculated above.

g) for said subgroup **Gn** to be activated, a common operating frequency **FR.oper** is chosen according to the following criteria (see Figure 2)

- if **Ratio.cc.Gn** falls within the zone **W MIN** (% of power output on the maximum comprised between 0% and **Min.turnover.level;** only one active compressor; **n** = 1) the operating frequency **FR.oper** is obtained from the proportion:
  *(FR.oper - 20) / (FR.min.lim.Eff - 20) = (ratio.cc.1 - 0) / (Min.turnover.level - 0)* In particular, if **FR.oper** is ≤ **FR.min.oper** no compressor **Cp** may be activated, then the subgroup **Gn** to be started is empty.
- if **Ratio.cc.Gn** falls within the zone **W INT** (% of power output on the maximum comprised between **Min.turnover.level** and **Max.turnover.level;** n active compressors) the operating frequency **FR.oper** is obtained from the proportion:

$$\textit{(FR.oper - FR.min.lim.Eff) / (FR.max.lim.Eff - FR.min.lim.Eff) =}$$

$$= \textit{(Ratio.cc.Gn} - \textit{Min.turnover.level) / (Max.turnover.level - Min.turnover.level)}$$

- if **Ratio.cc.Gn** falls within the zone **W MAX** (% of power output on the maximum comprised between **Max.turnover.level** and 100%; all the available active compressors; **n = m**) the operating frequency **FR.oper** is obtained from the proportion:

$$\textit{(FR.oper - FR.max.lim.Eff) / (FR.max.oper - FR.max.lim.Eff) =}$$

$$= \textit{(ratio.cc.Gm} - \textit{Max.turnover.level) / (100 - Max.turnover.level)}$$

h) the subgroup **Gn** is handed over to one of the possible **operating methods.** With regard to point b), the reference displacement **cc.Rif** is the displacement which, according to the simplified assumptions of the method described, would cover the load **W.req(t)** required at the moment when the corresponding compressors are operated at the frequency **FR.max.oper:** the reference displacement **cc.Rif** is the minimum displacement meeting the load **W.req(t)** but at the low efficiency of the frequency **FR.max.oper.**

With regard to point d), with reference to Figure 1, for the assumptions of the method described, (powers output as the frequency **FR** proportional to the displacements **cc** varies), the ratio **Ratio.cc.Gn** is equal to the ratio **Oper.ratio = W.oper / W.max.**

For every subgroup **Gn,** the greater is the displacement **cc.Gn** than the displacement **cc.Rif,** the more the requested power is output at a frequency **FR** lower than **FR.max.oper.**

With regard to point e), there may be many discretional criteria and that may be deemed suitable by the man skilled in the art in order to choose between two or more subgroups **Gn** that are substantially equivalent from the efficiency point of view.

With regard to point g), the operating frequency **FR,** assumed identical for all the compressors **Cp** during the **selection method,** may vary autonomously for one or more compressors **Cp** during operation in order to adjust its power as the load **W.req(t))** varies.

The above if **W.req(t)** ≤ **W.req.max = W.max.Gm.**

On the other hand, if **W.req (t) > W.req.max = W.max.Gm,** the totality of the available compressors **Cp** is not able to meet the utility **UT,**

> i) the subgroup **Gn** to be chosen is equal to the group **Gm** of all the **m** available compressors **Cp** and they start at the maximum operating frequency **FR.max.oper;** a conclusion which would also be reached according to steps a) to h);
>
> j) if the utility **UT** is for heating and not cooling, the conventional supplementary generators **WHB** and/or **EHE** generators activate to the extent sufficient to provide the missing thermal power **W.req(t)** - **W.max.Gm**

The procedure just described is very simple but does not take into account the inertia of the full operation of the apparatus HP.S if the powers involved are very significant: in fact, it may happen that the thermal load **W.req(t)** varies significantly during the development of the same procedure and the start-up of the compressors **Cp** engaged with the concrete risk of swings. The swing may be eliminated by imposing an adequate minimum time interval Δ**t.delay** between the start-up of a first subgroup **Gn'** and its replacement with a second group **Gn"** at least in the increasing step of **T.target(t).**

**· A second possible procedure for the selection**

A **second possible procedure for the selection** does not require the explicit knowledge of the actual value of **W.req(t)** but aims to meet it with the maximum possible efficiency by the comparison between the target temperature **T.target(t)** and the one actually read **T.eff(t)** even for the starting moment **t** = 0 aiming to cancel the error **e(t) = T.target(t)** - **T.eff(t)** with regulation methods PID well known to the man skilled in the art.

The correction entity **C(t)** to be set at any time **t** is given by the sum of the error **e(t)** with its integral and derivative, each multiplied by a corresponding constant **kp, ki, kd** determined by an expert of technical adjustment:

$$ C(t) = kp \cdot e(t) + ki \cdot \int e(t) \cdot dt + kd \cdot de(t) / dt $$

The principle of the invention that there is a constant proportionality ratio **R.W.cc** between deliverable power and displacement is always present. In fact, a predetermined displacement Δ**.cc.Gn** is associated with the correction **C(t),** that may be less or greater than 0, which is assumed to be necessary to ensure a power Δ**.W = R.W.cc / Δ.cc.Gn** equal to the missing/excess power reported by the entity of the same correction **C(t)** and to be added/subtracted from the displacement of the currently active subgroup **Gn'** to replace it with a new subgroup **Gn"** which ensures the delivery of the power **W.oper.Gn = W.req(t)** provided at the common maximum efficiency frequency **FR.max.Eff** of all the **n** compressors.

If **C(t)** ≠ 0 it means that the currently active subgroup **Gn'** having a displacement of **cc.k'** must be replaced by a subgroup **Gn"** having a displacement of **cc.k" = cc.k'** ± Δ**.cc.Gn** where the sign ± means that the variation may lead to an increase/decrease in the total displacement.

If for the composition of the subgroup **Gn** there are several alternative choices among the compressors **Cp** that may be selected, the choice, as already mentioned, according to further options, is taken.

For **t** = 0 the integral and the derivative of **e(t)** are not calculable, therefore the correction **C(0),** for now related only to the coeff. **kp** makes a choice of a first subgroup **Gn** presumably not suitable for the initial load **W.tot(0).**

Over time, the integral and the derivative of **e(t)** may be calculated, they start having a physical meaning and the correction **C(t)** is increasingly correct and timely; the **CM** is therefore able to select subgroups **Gn** increasingly suitable for the purpose without the load **W.req(t)** being actually known if not indirectly from the composition of the chosen subgroup **Gn.**

The alternation of a first subgroup **Gn'** with a second one **Gn"** may be carried out with the same procedure whenever the active subgroup **Gn'** departs from the maximum efficiency range.

The new subgroup **Gn"** does not immediately eliminate the error **e(t)** requiring a certain time to reach the full capacity; a time that the regulation system PID must take into account; if, however, by applying the maximum possible correction **C(t)** an error **e(t)** remains after a time greater than that of set up, it means that the load **W.req(t)** has become > **W.req.max** and may be fully met only with the help of the conventional heat generators **WHB**and/or **EHE** (provided that it is a cooling load).

Definitely,

- the first possible procedure described evaluates the required load and chooses the subgroup **Gn** of the displacement necessary to meet it with the maximum efficiency;
- the second possible procedure, instead, evaluates the difference between the power supplied and required load and calculates the variation of displacement necessary to cancel such difference.

**• Discretionary criteria for choosing the compressors Cp to compose the subgroup Gn to be activated.**

Among the selected subgroups **Gn** resulting equivalent from the efficiency point of view, the one that meets further conditions is choosen, such as for example:

- the subgroup **Gn** comprising a smaller number of compressors;
- the subgroup **Gn** comprising the smallest number of compressors that risk being unavailable because they may be delegated to the service of other priority utilities;
- the subgroup **Gn** comprising compressors with fewer hours of activity, for the purpose of keeping substantially uniform the progress of the wear state of all the **m** compressors.

The **selection method** is applied whenever the current composition of the subgroup of operating compressors **Gn** is deemed to be suitable or necessary to be changed. Among the possible main reasons for the change of the subgroup **Gn** there are the following reasons herein mentioned all together as **opportunity for a new selection:**

- obviously at every start-up of the refrigeration machine (or heat pump) system **S.HP;**
- in case of variation of the load **W.req(t)** which makes the subgroup **Gn** exuberant or insufficient or at least operating under conditions considered as too far from those of maximum efficiency; in particular when the **n** compressors **Cp** exceed the optimal lower and upper limits of maximum efficiency **FR FR.min.lim.Eff,** and **FR.max.lim.Eff;** there is necessarily an exception to such rule when the load **W.req(t)** is so low as to be satisfied only by the compressor of minimum power and below the lower limit of maximum efficiency **FR.min.lim.Eff** or so high as to be met only by the engagement of all the **m** compressors and above the upper limit of maximum efficiency **FR.max.lim.Eff;**
- in the event of a reduction in the number **n** of compressors engaged in the subgroup **Gn** because one or more of its compressors **Cp** declares itself no longer available, e,g. because delegated to another priority service or in failure;
- but also due to an increase in the number **m** of compressors available in the group **Gm** because the compressors declared temporarily unavailable they return to be it and may offer opportunities for composing a more advantageous subgroup **Gn;**
- finally, always optionally and in order to verify the opportunity of composing a more advantageous subgroup **Gn,** even for variations in the load **W.req(t)** that did not lead to exceed the optimal frequency limits **FR.**

Therefore, in general, any variation of the group of compressors **Gm** or the reduction of the number **n** of compressors of the operating subgroup **Gn** or variations of the load **W.req(t)** makes at least suitable a reexamination of the most advantageous subgroup **Gn** for the instant **t** and the reporting to the **managing method** of the new subgroup **Gn** considered to be more advantageous. The proposed new combination of the subgroup **Gn** is evaluated but is not necessarily accepted by the **operating method** if the turnover is not recommended for other reasons.

The activation of the **selection method** may be carried out at predetermined time intervals and/or at limit values of the frequency **FR** that may not be exceeded, i.e. before reaching the frequencies **FR.min.oper** and **FR.max.oper** and at the exit from the limits **FR.min.lim.Eff** and **FR.max.lim.Eff.** In such case, if the **selection method** detects a new subgroup **Gn** identical to that currently already operating, it could be preferred that no signal is output towards the **managing method.**

Alternatively, the **selection method** may activate upon request of the intended **operating method.**

Still alternatively, the **selection method** may activate either on its own initiative or on request of the **operating method.**

Ultimately, the **selection method** and the subsequent possible **operating methods** are completely autonomous and applicable separately:

- the **selection method** delivers the subgroup Gn of compressors that has chosen according to its criteria to any possible **operating method**
- the **operating method** operates the subgroup Gn according to its criteria regardless of the fact that the same subgroup Gn has been chosen from **the selection method** according to the invention or according to any other method.

### • Preferred operating methods

Among the main purposes of the **operating method** there are:

- continuously modulating the operation frequency **FR** of each of the compressors **Cp** chosen by the **selection method** in order to adapt it to the load **W.req(t)** as time **t** passes, keeping said frequency **FR** within the limits of maximum efficiency;
- acknowledging a new subgroup **Gn** from the **selection method** that activated for the purpose either spontaneously or on invitation of the same **operating method**

During operation, the frequency **FR** of the compressors **Cp** of the engaged group **Gn** is made to vary in order to maintain the total power output **W.oper.Gn** equal to the requested power **W.req(t).**

All compressors **Cp** of the engaged subgroup **Gn** have been selected with reference to the parameters of a same common broken line **sp.Gm,** which has been assumed as valid for all the compressors **Cp** engaged and assumed to operate at a same frequency. If such assumption is substantially valid (especially if the compressors **Cp** are of sufficiently similar types), during the operation the compressors **Cp** may all continue to be operated at the same frequency, dictated by the said common broken line **sp.Gm,** to obtain the desired power ratio **Oper.ratio,**

In general, however, each k-th compressor **Cp** of such subgroup is then preferably operated with reference to its specific broken line **sp.k** by choosing the frequency **FR** to be applied to it to obtain its desired power share on the total request and with the greatest possible efficiency.

This is the most precise way to obtain the correct correspondence between the applied frequency **FR** and the respective ratio **Oper.ratio.**

For the maximum generalisation, which does not sacrifice precision while limiting the complexity of the operating method, the compressors **Cp** of the subgroup **Gn,** may be combined into one or more sub-assemblies **SGn', SGn",** etc. each comprising compressors **Cp** of identical or substantially identical type and that therefore share corresponding broken lines **sp.SGn', sp.SGn",** etc. and which therefore may be operated at the specific frequency **FR** of the sub-assembly **SGn** it belongs to.

Ultimately, it is possible that during operation the limit case ranges from all the compressors in the subgroup **Gn** operated at a common frequency **FR** following the common broken line **sp.Gm** to the opposite end of each k-th compressor operated at its own frequency **FR** by following its specific broken line **sp.k** passing by the intermediate cases of multiple sub-assemblies **SGn** which share the same **sp.SGn.**

For simplicity of description, any set of compressors Cp driven at a frequency **FR** shared by them is hereinafter considered as consisting of a sub-assembly **SGn** which may therefore comprise from 1 to all the **n** compressors **Cp** of the subgroup **Gn.**

In any case, the **operating method** must coordinate the various frequencies FR that it applies and modulates in each sub-assembly **SGn,** otherwise it does not achieve the objective of obtaining the output of the requested power equal to **W.req.(t)** and less than ever at the highest overall efficiency possible at the moment.

### • Variants of the operating method.

It is preferred that a change of the subgroup **Gn** occurs at time distances greater than a predetermined minimum **t.min.turnover.**

It is preferred that an output from the maximum efficiency limits be tolerated for a predetermined time **t.min.out** to avoid swings in the event that the load **W.req(t)** falls within the limits in which the current subgroup **Gn** operated in optimal conditions.

### • Raising of the Min.turnover.level

It may be useful to restrict the range of the operating frequencies by increasing the value of the **Min.turnover.level** to a higher **Min.turnover.level.var** by bringing the preset and invariant frequency **FR.min.lim.Eff,** to a variable value **FR.min.lim.Eff.var** according to the number n of operating compressors **Cp**

The rule of thumb is to set, for **n > 2,**

$$\textbf{Min.turnover.level.var} = \textbf{Max.turnover.level} \cdot (\textbf{n - 1})/\textbf{n}$$

This strategy may be useful when it is preferred, for simplicity, to operate one or more compressors **Cp** at a specific common frequency of other compressors **Cp,** although the former are of a slightly different type than that of the latter.

By applying the rule, the greater the number of operating compressors, the greater the value of **Min.turnover.level.var** is made and this means that the operating method of the **CM,** when the compressors modulate downwards, tends more to switch off one of them raising the frequency **FR** and the power of the remaining ones. The aforementioned rule of thumb, on the other hand, leads the compressors **Cp** to work in a more centred way with respect to the range of greatest efficiency.

#### • Advance calculation of the power deficit with respect to the request W.req(t)

It may be useful to evaluate the entity of the power deficit **W.deficit(t)** with respect to the request **W.req(t)** at the moment **t** when all the **m** available compressors are engaged and operate at maximum load but the temperature **T.eff(t)** read at delivery by the sensor **S** does not reach the target temperature

**T.target(t).**

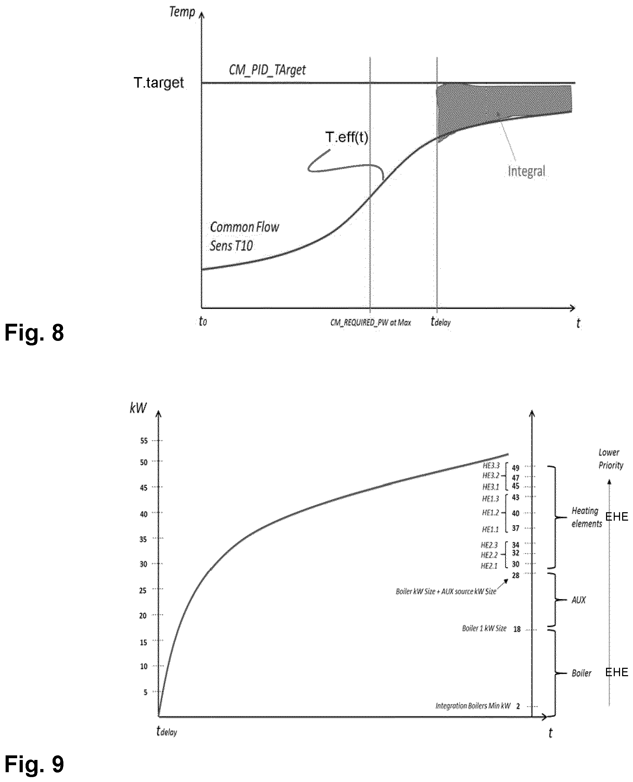

The situation is shown in Figures 8 and 9.

The advance calculation of the power deficit helps choosing the power of the auxiliary heaters (boilers **WHB** and/or electrical resistances **EHE**) that needs to be added, even gradually and with a certain forecast of the nearest future requests. By integrating the control error between **T.eff(t)** and **T.target(t)** over time, there is an evaluation of the additional power that the system is requesting and that the m available compressors **Cp** are unable to provide.

Figure 8 shows a graph of the temperature trend **T.eff(t)** as a function of time **t;** in this case, substantially, the temperature **T.eff(t)** tends to settle on a value that may not reach **T.target(t)** or would reach it extremely slowly.

According to such additional method, the value of the integral **T(t).dt = f[T.target(t) - T.eff(t)] . dt** is calculated from an initial instant **t.delay** to the current moment **t,** where **t.delay** may be the moment **t** starting from which, a deviation is noted between **T.target(t)** and **T.eff(t)** that, at discretion of the man skilled in the art delays to reduce. The value of the integral **T(t).dt** is representative of the power deficit **W.deficit(t)** in a moment **t** (power requested at the time **t,** ma not provided) and may be transformed into the actual value of said power deficit **W.deficit(t)** by a parameter that may be set according to the characteristics of the utility **UT;** e.g. by taking into account the estimated thermal capacity **C** and flow rate **G(t)** of the heat transfer fluid **Th.v.1** or **Th.v.2.**

The flow rate **G(t)** may also be measured by the aforementioned flow meter or known a priori, at least by approximation, by the type of user **UT** served at the time (conditioning, room heating, etc.).

Indeed, the value **C. ∫ G(t). [T.target(t) - T.eff(t)]. *dt*** integrated from **t.delay** to current **t** would accurately provide the power deficit **W.deficit(t)** if the actual flow rate **G(t)** which is presumably variable with the time **t** by performing at least samplings at time intervals **∆t** of the time **t** is wished to be measured.

However, even ignoring the actual value of **G(t),** the integral **T(t).dt = J[T.target(t) - T.eff(t)] . dt** provides information on the supplementary power that must be supplied with supplementary heat generators and allows establishing how many and what supplementary information sources to use, even gradually, but avoiding having to intervene late, by attempts. As an example, the calculated value **T(t).dt** may be compared with predefined limits of values to establish what and how many conventional heat generators should be activated.

According to a preferred variant, a heat generator is activated first which satisfies the bulk of the request to which further generators of lesser power adduntil covering all the power deficit **W.deficit(t).**

Figure 9 shows the trend over time of the supplementary power provided primarily by a fossil fuel boiler **WHB** to which multiple electrical elements **EHE** of much minor power gradually add.

When the powers involved allow choosing, priority is given to generators powered by the energy sources that are cheaper at the moment. E.g, to the electrical resistances **EHE** rather than to the fuel boiler **WHB** if a photovoltaic system for self-consumption is available and this is producing a power surplus that is unusable at the moment for thermodinamically more efficient applications; to the fuel boiler **WHB** if not.

Of course, it is preferred that said additional heat generators have modulable power as well as that they may be alternated to adapt the power supplied by them to the exactpower deficit **W.deficit(t).**

At this point all the compressors of the group **Gm** are at frequency **FR** of maximum operating limit **FR.max.oper** and one or more conventional active heat generators **WHB** and/or **EHE** of which preferably at least one modulating to keep **T.eff(t) = T.target(t).**

#### • Determination of the initial power required W.req(t) for t = 0

The method just described may also be used at the start-up instant for **t** = 0 or during operation at any time **t** to know or estimate the value of the required load **W.req(t),** in fact;

- at start up, since the output power **W** is still null, the power deficit **W.deficit(0)** is equal to the requested load **W**.tot(0);
- during operation, but only to know immediately **W.req(t)** that would however be met by varying the frequency **FR,** the operating power **W.oper.Gn** of the operating subgroup **Gn** being known, is **W.req(t) = W.oper.Gn + W.deficit(t).**

But much more simply, the requested load **W.tot(t),** being proportional to **target(t),** is equal to **k.UT.T.target(t)** where **k.UT** may be a predetermined constant characteristic of the utility **UT** or exactly equal to **C. G(t);** there is therefore **W.tot(t) = C. G(t). T.target(t)** where the thermal capacity **C** and the flow rate **G(t)** are either estimated or known or measured.

• **Prevention of possible swings when requesting a new subgroup Gn of compressors Cp.**

Even if the **selection method** according to the invention (or other methods) correctly chooses the subgroup Gn of compressors**Cp** to be activated in order to meet the requested power **W.req(t)** at the optimal frequencies, the startup of the compressors up to such frequency may require some minutes (generally from 8 to 11) during which the **operating method,** if a a delay is not introduced, would register a power deficit **W.deficit(t)** that may take it to require an increase thereof by activating again the **selection method** that would ultimately provide excessive power from which a reduction request and so on.

The problem is solved with the regulation PID by assigning appropriate time constants.

The usable formula is the following

$$u(t) = n \cdot [e(t) + 1/T_i. \int_{da\,0\,a\,t} e(t).dt + T_d. \, de(t)/dt]$$

where:

- **u(t) is** the % correction of the power **W.req(t)** which is required to bring **T.eff(t)** to the value **T.target(t)**
- **e(t)** is the aforementioned error read
- **k, 1/T$_i$, T$_d$** are constants of predetermined value by a computer expert to obtain a chosen delay and that which also depend on the characteristics of the system to be adjusted.

The delay to be introduced for calculating the power for a refrigeration machine (or heat pump) system **HP.S** of the type herein described is very preferably comprised between 4 and 15 minutes.

• **Prevention of possible swings during operation**

During operation, if it happens at a common frequency **FR,** the single compressors of the subgroup **Gn** act as an individual device that varies its power according to the frequency imposed by the **operating method** without interferences among the power variations of each compressor **Cp.**

If, on the other hand, one or more sub-assemblies **SGn** operate at their individual frequencies, the power variation output by a sub-assembly **SGn** would vary the power requirement to output by the remaining active sub-assemblies **SGn** in order to meet **W.req(t)** if the individual fractions of the power **W.req(t)** to be output to each compressor are not coordinated therebetween.

There may be several methods within the reach of the person skilled in the art in order to avoid swings.

A possible solution is assigning each sub-assembly **SGn** operated at its self-frequency **FR** the output of a fixed fraction of the power **W.req(t)** since the taking over of the entire subgroup **Gn** by the **operating method** where such fractions assigned may be proportional to the maximum powers that may be output by each of such subgroups **SGk.**

In such way it is certain that each sub-assembly **SGn** takes care of its power fraction without interfering on the quotes of the others.

Another similar solution is to establish a hierarchy of the sub-assemblies **SGn** from the most to the least powerful such as the output power W.max.**SGn** and then:

- bring the most powerful of said sub-assemblies **SGn** at the closest possible frequency **FR** to its frequency of maximum efficiency **FR.max.Eff.SGn** which corresponds to a corresponding fraction of guaranteed power on the total load **W.req(t)** to be provided
- record the residual power share to be ensured by the remaining sub-assemblies **SGn,**
- proceed with the subsequent sub-assemblies **SGn** with the same criterion by assigning each further sub-assembly **SGn** in the hierarchy an operating frequency **FR** that is as close as possible to its frequency of maximum efficiency **FR.max.Eff.SGn** and recording again the residual power to be ensured until the last residual power is assigned to the last sub-assembly **SGn.**

In such way it is certain that the overall generated power is for most part output at the real conditions of maximum possible efficiency.

## • Heat pumps with priority for the heating of domestic hot water

When one or more bodies **WH** require heating power, the one or more heat pumps **HPwh** arranged to serve them, or better one or more compressors **Cp** they have, are declared unavailable for the **selection method** and the heat transfer fluid **Vd Th.v.1** heated by the heat pumps **HPwh** is sent to the corresponding bodies **WH.** Consequently, the number **m** of available compressors for the operating method is momentarily reduced as mentioned above.

## • Examples of the operating method

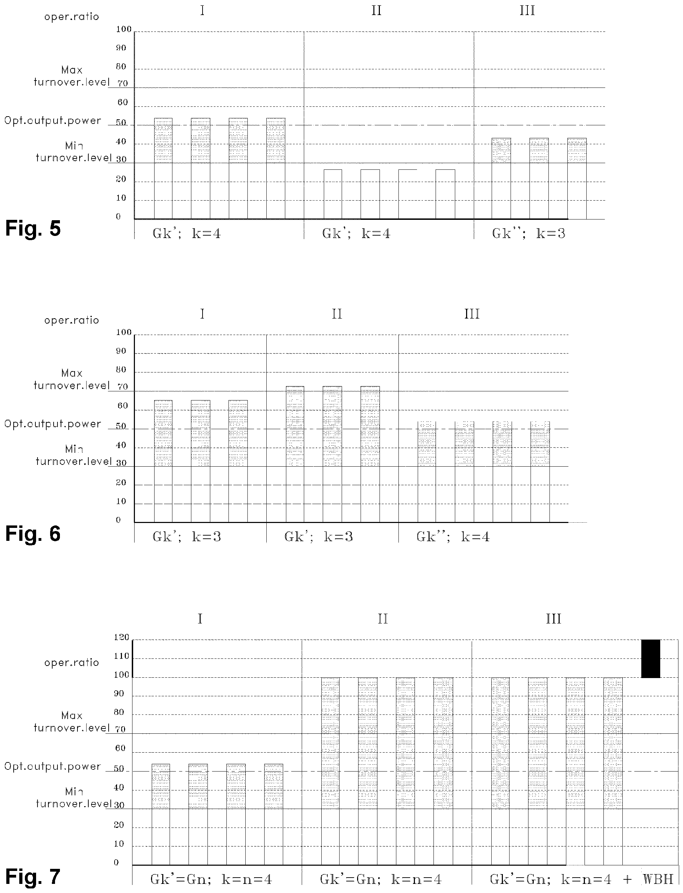

Figures 5-7 show, by way of an example, three steps I, II, III with transitions of the operating state of multiple compressors **Cp** made operative by the choices of the selection method.
Figure 5 shows,

- in step I, a subgroup **Gn'** with **n** = 4 operating compressors that are operating close to the maximum efficiency **Opt.output.power;**
- in step II, the same subgroup **Gn'** with **n** = 4 operating compressors that are now operating below the maximum efficiency limit **Min.turnover.level** because a reduction of the requested power **W.req(t)** led to a reduction of their rotation frequency according to the **operating method;**
- in step III, the **CM** reduced the number of compressors creating the subgroup **Gn"** with only **n** = 3 compressors that now, in order to provide the requested power, operate at a higher frequency that takes them to a zone close to the maximum efficiency **Opt. output. power.** Figure 6 shows,
- in step I, a subgroup **Gn'** with **n** = 3 compressors that are operating within the maximum efficiency zone, close to **Max.turnover.level;**
- in step II, the same subgroup **Gn'** with **n** = 3 compressors that are now operating above the limit of maximum efficiency **Max.turnover.level** because an increase in the power requirement **W.req(t)** has led to an increase in the rotation frequency;
- in step III, the **CM** has increased the number of compressors creating the subgroup **Gn"** with **n** = 4 compressors that now, in order to provide the requested power, operate at a lower frequency which takes them to a zone close to the maximum efficiency **Opt.output.power** .

Figure 7 shows,
- in step I, a subgroup **Gn'** with **n** = **m** = 4 compressors (i.e. coinciding with the group **Gm** that contains the entire pool of available compressors) that are operating within the zone of maximum efficiency, close to **Opt.output.power;**
- in step II, the same subgroup **Gn'** with **n** = **m** = 4 operating compressors is led to operate at the maximum power they may output and at the maximum frequency, therefore at low efficiency, but nevertheless they are unable to meet the requested power **W.req(t).** Any calculation of the integral **T(t).dt. f[T.target(t) - T.eff(t)] . dt** indicates the missing power.
- in step III, the **CM** has kept the same subgroup **Gn'** with **n** = **m** = 4 compressors but has added the boiler **WHB;** the subgroup **Gn'** is always kept at the maximum frequency, well above the **FR.max.lim.Eff.** because the low efficiency still involves a net energy saving compared to the use of a conventional heat generator.

## • Advantages and results of the selection method compared to the prior art

The **selection method** described uses much simpler selection criteria than the prior art (substantially the choice of a subgroup **Gn** whose total displacement is reasonable may output the necessary power at a frequency closest to that of maximum efficiency) but leads to the same results even with non-equivalent methods.
The **selection method** according to the invention quickly produces the correct choice if, as it generally happens, all the compressors **Cp** of the group **Gm,** even if of different displacement, actually operate according to a same curve **cu.Gn** (i.e. they are of the same type) but even if having compressors **Cp** of different types, the selection according to the invention or according to more strict criteria often converge almost inevitably to the choice of a same subgroup **Gn.**
Taking into account that the reference displacemnent **cc.Rif** is an abstract fractionary number while the displacements of the selectable subgroups **Gn** obviously take to an entire number of compressors, even when the number **N.Gn** of possible subgroups **Gn** is high, in examining the possible alternatives, those approaching the optimal efficiency conditions are of a more reduced number.

In addition, the herein described preferred operating methods modify the operating frequency **FR** to adapt it to the power **W.req(t)** required at the moment, by adjusting the same frequency with methods PID according to the deviation between the delivery temperature **T.eff(t)** and the target temperature **T.target(t).** That is, depending on the powers actually output and not on the displacements. Therefore, the generated powers are no longer bound by the basic assumption that the power is proportional to the displacement. In other words, the **selection method** chooses subgroups **Gn** according to the displacements **cc.k** while the **operating method,** by varying the operating frequency **FR.oper** of each subgroup **SGk,** tends to keep the compressors **Cp** close to the frequency **FR** of maximum efficiency **FR.max.Eff** while the **selection method,** with its turnovers, leads to converge towards the subgroups **Gn** actually chosen according to the displacements **cc.k** but still among the most suitable to meet the power **W.req(t)** required at the moment **t.**

From the above it is evident that the **selection method** and the **operating method** have two completely different roles;

- the first one, those of

> k) explicitly or implicitly evaluate the power **W.req(t)** required at the moment **t**
> l) select the most suitable subgroup **Gn** at the moment for supplying said power **W.req(t)** at the frequencies of maximum efficiency;

- the second one, those of

> m) modulate the power output by the entire system **HP.S** by aiming to maintain the temperature **T.eff(t)** equal to **T.target(t);**
> n) modulate the frequency of the operating subgroup **Gn** within optimal limits;
> o) ask the **selection method** for a new subgroup **Gn** alternative to the present one every time it exceeds the optimal frequency limits in order to meet the load **W.req(t);**
> p) choose supplementary conventional heat generators if the utility **UT** asks for heating and not refrigeration and the thermal power output by the entire group **Gm** is not sufficient;
> q) possibly modulate the thermal power of said conventional heat generators or at least report to the sensor **S** the temperature **T.target(t)** that must be reached;
> r) activate, of said conventional heat generators, when there is the possibility of alternative choices, those using energy of lower cost at the moment.

From the foregoing it is also clear that the **selection method** and the **operating method** have instead, as common goal, the choice of the group of compressors that allows the best possible efficiency in the various situations. However, this may be in contrast with the practical need of uniformly carrying out the wear of all the compressors **Cp** of the group **Gm.** That may be achieved, in partial derogation of the **selection** and **operating methods,** by activating the compressors **Cp** with lesser operating hours than all the other compressors **Cp** even at the expense of an efficiency reduction. Preferably, such choice occurs when operating in zone **W MIN** where the requested power is so low that the output of the same at low efficiency constitutes a negligible loss in absolute terms. This derogation procedure may also be applied in zone **W INT** and may preferably be manually activated/deactivated discretionally by the manufacturer or the operator of the system S.HP. It is clear that in zone W MAX, where all the compressors **Cp** of the group **Gm** must be activated, said derogation procedure is not applicable.

## Claims

1. **Managing method** of a system **(S.HP)** comprising a group of refrigeration machines (**HP**) aimed at improving the efficiency thereof where said refrigeration machines (**HP**)

> - supply thermal power for providing heating or cooling to the same utility (**UT**) that requires a thermal load of power **W.req(t)** that is variable over time **t,**
> - for this purpose, they exchange thermal power with the same primary heat transfer fluid (**Th.v.1**),
> - said power supply occurring either directly through said primary heat transfer fluid (**Th.v.1**) or through the heat exchanger (**HE**) with a secondary heat transfer fluid (**Th.v.2**),
> - collectively use a group (**Gm**) of **m** rotary compressors (**Cp**), all operated at the same mains voltage **V,** selected by quantity and size, adapted to collectively deliver a maximum power **W.max.Gm** that may meet said thermal load **W.req(t)** at least up to its value **W.req.max,**

where each k-th of said **m** rotary compressors (**Cp**)

- may have specific functional characteristics,
- may be individually selected from said group (**Gm**), according to the configuration of the system, to contribute to the formation of all possible combinations of subgroups (**Gn**) of **n** of said **m** compressors (**Cp**) necessary to meet said thermal load **W.req(t)** at a time **t** of up to said maximum output power **W.max.Gm,**
- operates at a variable operating rotation frequency **FR,**
- generates its operating power **W.oper** increasing with said operating frequency **FR** up to its maximum power **W.max.k** output at a maximum operating frequency **FR.max.oper.k,**
- has its own displacement **cc.k,**
- has performance that is represented by its own curve (**cu.k**) that indicates, on a Cartesian coordinate plane [**FR** (ordinate) - **Oper.ratio** (abscissa)], the relation between said operating frequency **FR** and a ratio **Oper.ratio = W.oper / W.max.k** equal to the ratio between said operating power **W.oper** and said maximum power **W.max.k,**

- where said curve (**cu.k**)
- has an inflection at the coordinates [**FR.max.Eff.k** - **Opt.output.power.k**] where **FR.max.Eff.k** is the frequency **FR** that corresponds to the operating condition at the maximum efficiency and **Opt.output.power.k** is the ratio **Oper.ratio = W.max.eff.k / W.max.k** where **W.max.eff.k** is the power output at maximum efficiency at said frequency **FR.max.Eff.k**
- and is approximated by a broken line (**sp.k**) consisting in three consecutive segments identified respectively by the ends thereof [**V1.k, V2.k**], [**V2.k, V3.k**], [**V3.k, V4.k**] that make up the vertices (**V1.k, V2.k, V3.k, V4.k**) of the said broken line (**sp.k**), said vertices identifying the particular limit operating conditions having respectively for said ordinate **FR** and abscissa **Oper.ratio** the parameters of increasing value

[**FR.min.oper.k** - **0%**],
[**FR.min.lim.Eff.k** - **Min.turnover.level.k**],
[**FR.max.lim.Eff.k** - **Max.turnover.level.k**],
[**FR.max.oper.k** - **100%**]
where
**FR.min.oper.k** and **FR.max.oper.k** are respectively the minimum and maximum operating frequencies allowed,
**FR.min.lim.Eff.k** and **FR.max.lim.Eff.k** are respectively the minimum and maximum frequency within which the efficiency is considered as sufficiently close to the maximum one obtainable within which the efficiency is considered as sufficiently close to the maximum obtainable one that occurs to the aforementioned coordinates [**FR.max.Eff.k** - **Opt.output.power.k**] and within the corresponding values whereof **Oper.ratio = Min.turnover.level.k, Max.turnover.level.k** the output power of said compressor (**Cp**) is preferred to be limited,

and where each of said subgroups (**Gn**) is associated with a total displacement (**cc.Gn**) and a maxmum total power respectively equal to the sum of the said displacements **cc.k** and to the sum of the said powers **W.max.k** of each k-th compressor (**Cp**) belonging to the said subgroup (**Gn**);
and where said system (**S.HP**) comprises a managing apparatus (**CM**) that is at least aimed at improving the efficiency thereof in the power supply to said thermal load **W.req(t)** by choosing and activating a suitable subgroup (**Gn**) of **n** (with $1 \leq n \leq m$) of said m rotary compressors (**Cp**) comprised in said group (**Gm**), by conducing each of said **k** rotary compressors (**Cp**) of said suitable subgroup (**Gn**) at the frequency **FR** as close as possible to said maximum efficiency **FR.max.Eff.k;**
**said managing system being characterised in that** for the choice of said suitable subgroup (**Gn**) of possible **n** of said **m** rotary compressors (**Cp**),

a) a broken line (**sp.Gm**) is built that is substantially representative of the performance of all said compressors (**Cp**) belonging to said group (**Gm**) determining, according to criteria that legitimate the representativeness of the same broken line (**sp.Gm**) for the purposes of the method:

a. 1) the values of the coordinates [**FR, Oper.ratio**] of its vertices **V1, V2, V3, V4** homologous to said vertices **V1.k V2.k, V3.k, V4.k** of said broken lines (**sp.k**),
a.2) and the value of the frequency **FR** of maximum efficiency **FR.max.Eff,** comprised among the frequencies **FR.min.lim.Eff** and **FR.max.lim.Eff** corresponding to the ratio **Oper.ratio = Opt.output.power** to which the power output occurs at the maximum efficiency;

b) a maximum power conventional value **W.max.k\* = R.W.cc . cc.k** is associated to each of said displacements **cc.k** of said compressors (**Cp**), where **R.W.cc** is a predetermined value proportionality ratio, equal for each of said compressors (**Cp**) so that a correspondent conventional power **W.max.Gn\* = R.W.cc . cc.Gn** is associated also to each of said possible subgroups (**Gn**), including said group (**Gm**);

c) for the supply of said thermal power **W.req(t)** ≤ **W.req.max**

c.1) the displacement **cc.min** corresponding to a conventional thermal power equal to said thermal load **W.req(t)** or to the maximum quota of said load that is possible to meet according to the relation **cc.min = W.req(t) / R.W.cc** is calculated,

c.2) the subgroup (**Gn**) of compressors (**Cp**) selectable at the moment whose corresponding total displacement **cc.Gn** is such as the ratio **cc.min / cc.Gn** is closest to said maximum efficiency ratio **Opt.output.power** is chosen and calculated;

d) in case of substantially identical results between two or more of said subgroups **Gn** for the purposes of the best efficiency, that best respondent to further criteria is chosen.

2. **Managing method** of a system **(S.HP)** according to the previous claim,
   **characterised in that,**

   in said broken line (**sp.Gm** ),
   the said determined values of the said coordinates **[FR -Oper.ratio]** of said vertices **V1, V2, V3, V4** are selected within the following range of values dictated by experience:

   - **FR.min.oper** between 15 and 25Hz,
   - **FR.min.oper** between 115 and 125Hz,
   - **Min.turnover.level** comprised between 20% and 40% and corresponding frequency **FR.min.lim.Eff** comprised between 40 and 55Hz,
   - **Min.turnover.level** comprised between 60% and 80% and corresponding frequency **FR.min.lim.Eff** comprised between 65 and 80Hz;

   whilst to said **Opt.output.power** and **FR.max.lim.Eff** are assigned values that are intermediate to the values of **Min.turnover.level** and **Max.turnover.level** respectively and corresponding frequencies **FR.min.lim.Eff** and **FR.max.lim.Eff.**

3. **Managing method** of a system **(S.HP)** according to the previous claim, **characterised in that,**

   - said **FR.min.oper** is equal to 20Hz,
   - said **FR.max.oper** is equal to 120Hz,
   - said **Min.turnover.level** is equal to 30% and the corresponding frequency **FR.min.lim.Eff** is equal to 50Hz,
   - said **Max.turnover.level** is equal to 70% and the corresponding frequency **FR.min.lim.Eff** is equal to 70Hz,
   - said **Opt.output.power** is equal to 50% and the corresponding frequency **FR.min.lim.Eff** is equal to 60Hz,

4. **Managing method** of a system **(S.HP)** according to claim 1,
   **characterised in that,**

   for the determination of the values of:

   - said coordinates of said vertices **V1, V2, V3, V4,**
   - said **Oper.ratio = Opt.output.power** and said corresponding frequency **FR.max.lim.Eff,**
   - said predetermined proportionality ratio **R.W.cc,**

   initially at the composition of the said group (**Gm**) and every time that such composition changes by substitution, addition, removal of some of said compressors (**Cp**), the said managing apparatus (**CM**), once having acquired the necessary data for the purpose of each k-th of said **m** compressors (**Cp**), calculates:

   - a common minimum operating limit **FR.min.oper** equal to the maximum of said values **FR.min.oper.k,**
   - a common maximum operating limit **FR.max.oper** equal to the minimum of said values **FR.max.oper.k,**
   - a frequency **FR** of maximum efficiency **FR.max.Eff** equal to the average of said frequencies **FR.max.Eff.k** and a correspondent **Oper.ratio = Opt.output.power** equal to the ratio between the average of said single powers **W.max.eff.k** and average of said single powers **W.max.k** where said averages are simple or weighted according to the displacements **cc.k** of the same compressors,
- a maximum efficiency lower frequency limit **FR.min.lim.Eff** equal to said **FR.max.Eff - ΔFR.min,**
- an upper frequency limit of maximum efficiency **FR.max.lim.Eff** equal to said **FR.max.Eff + ΔFR.max,**

- where said Δ**FR.min** and Δ**FR.max** are chosen on the basis of what is considered as acceptable as a compromise between maximising efficiency and the frequency of changes in the **Gn** subgroups to be activated,
- a minimum value of the **Min.turnover.level** equal to the highest of said values of **Min.turnover.level.k,**
- **Max.turnover.level** equal to the lowest of the said values **Max.turnover.level.k** attributed to each of the **m** compressors,
- the total displacement **(cc.Gm)** equal to the sum of the said displacements **cc.k** of each of the said compressors (**Cp**),
- and the maximum power actually output **W.max.Gm** equal to the sum of the said **W.max.k,**
- the proportionality ratio called **R.W.cc** equal to the ratio between said maximum power **W.max.Gm** and said total displacement (**cc.Gm**).

5. **Managing method** of a system (**S.HP**) according to any previous claim,
   **characterised in that:**
   if said required load **W.req(t)** is ≤ to said maximum power **W.max.Gm** output from the totality of the compressors, then, at least at every start of said refrigeration machine system (**S.HP**), the following steps are carried out:

   a) the fraction **req.W.ratio** is calculated as the ratio between the said requested power **W.req(t)** and the said total deliverable power **W.max.Gm:**

$$req.W.ratio = W.req(t)/W.max.Gm$$

   b) the reference displacement **cc.Rif** as a product of **req.W.ratio** for **cc.Gm** is calculated:

$$cc.Rif = req.W.ratio \cdot cc.Gm$$

   c) the total displacement **cc.Gn** is calculated of all possible subgroups (**Gn**) of **n** compressors,
   d) for each subgroup (**Gn**) the following ratio is calculated

$$Ratio.cc.Gn = cc.Gn / cc.Rif$$

   e) the subgroup (**Gn**) whose ratio **Ratio.cc.Gn** is closer to the maximum efficiency value **FR.max.Eff** is chosen and, in case of multiple subgroups (**Gn**) substantially equivalent with regard to efficiency, that meeting further discretional criteria is chosen among said subgroups (**Gn**);
   f) for said subgroup (**Gn**) to be activated, a common operating frequency **FR.oper** is chosen according to the following criteria:

   f.1) if **Ratio.cc.Gn** falls within the zone **W MIN** (% of power output on the maximum comprised between 0% and **Min.turnover.level** the said operating frequency **FR.oper** is obtained from the proportion

$$(FR.oper - 20)/(FR.min.lim.Eff - 20) =$$

$$= (ratio.cc.1 - 0)/(Min.turnover.level - 0)$$

   where, if **FR.oper** is ≤ **FR.min.oper** then said subgroup (**Gn**) to be started is empty;
   f.2) if **Ratio.cc.Gn** falls within the zone **W INT** (% of power output on the maximum comprised between **Min.turnover.level** and **Max.turnover.level** the said operating frequency **FR.oper** is obtained from the proportion

$$(\text{FR.oper} - \text{FR.min.lim.Eff})/(\text{FR.max.lim.Eff} - \text{FR.min.lim.Eff}) =$$

$$= (\text{Ratio.cc.Gn} - \text{Min.turnover.level})/(\text{Max.turnover.level} - \text{Min.turnover.level})$$

f.3) if **Ratio.cc.Gn** falls within the zone **W MAX** the said operating frequency **FR MAX** is obtained from the proportion

$$(\textit{FR.oper} - \textit{FR.max.lim.Eff})/(\textit{FR.max.oper} - \textit{FR.max.lim.Eff}) =$$

$$= (\textit{ratio.cc.Gm} - \textit{Max.turnover.level})/(100 - \textit{Max.turnover.level})$$

g) in the end, if said selected subgroup (**Gn**) to be activated is different from the possible subgroup (**Gn**) already operating, all said compressors n of the same subgroup (**Gn**) are brought to said common operating frequency **FR.oper;**

if instead said required load **W.req(t)** is greater than said maximum power **W.max.Gm** output from the compressors as a whole, then

h) the selected subgroup (**Gn**) is equal to the group **Gm** of all the **m** available compressors **Cp** that are started at the same max common operating frequency **FR.max.oper**

i) and, if said load **W.req(t)** is for heating, one of more conventional heat generators **WHB** and/or **EHE** are activated until they output a power **W.req(t)** - **W.max.Gm.**

6. **Managing method** of a system **(S.HP)** according to any previous claim, excluding 5, **characterised in that**

a) said target temperatures **T.target(t)** are compared and **T.eff(t)** actually read since the start time **t** = 0 by calculating the error **e(t) = T.target(t)** - **T.eff(t)**

b) according to regulation methods PID, to a correction function **C(t)** is assigned a value equal to the sum of the error **e(t)** with the integral thereof and the derivative thereof multiplied by correspondent constants **kp, ki, kd** according to the relation

$$C(t) = kp \cdot e(t) + ki \cdot \int e(t) \cdot dt + kd \cdot de(t)/dt$$

c) a predetermined displacement $\Delta$.**cc.Gn,** chosen to ensure a power $\Delta$.**W** equal to the lacking/exceeding power reported by the entity of the same correction **C(t)** and to be added/removed to/from the displacement of the subgroup (**Gn'**) at the active time in order to replace it with a new subgroup (**Gn"**) that tends to meet said correction **C(t)** in the conditions as close as possible to those of maximum efficiency, is associated with said correction **C(t);**

d) if, by applying the maximum correction **C(t)** as possible, said error **e(t)** does not cancel and said load **W.req(t)** is for heating, one or more conventional heat generators **WHB** and/or **EHE** of sufficient power to cancel the said error **e(t)** are activated.

7. **Managing method** of a system **(S.HP)** according to any previous claim, **characterised in that**

said additional selection criteria to be adopted in the event that two or more of said subgroups (**Gn**) offer substantially the same results for the purposes of better efficiency that satisfying one of more of the following conditions is preferred:

a) the subgroup (**Gn**) comprising a smaller number of n compressors (**Cp**);

b) the possible subgroup (**Gn**) that does not comprise compressors (**Cp**) that may become unavailable because capable of being assigned to the service of other priority utilities;

c) the subgroup (**Gn**) comprising compressors (**Cp**) with fewer operating hours,

d) as an alternative to point c, e) the subgroup (**Gn**) which comprises compressors (**Cp**) with greater activity hours.

8. **Managing method** of a system **(S.HP)** according to any previous claim, **characterised in that**

in said subgroup (**Gn**) which was chosen to be activated, one or more of said compressors (**Cp**) are substituted with compressors (**Cp**) with lesser operating hours relative to all the other said compressors (**Cp**) where such substitution procedure may be manually activated/deactivated discretionally by the manufacturer or operator of the system S.HP.

9. **Managing method** of a system **(S.HP)** according to any previous claims, from 4 onwards, **characterised in that**
said values ΔFR.max and ΔFR.min are equal to 10Hz.

10. **Managing method** of a system **(S.HP)** according to any previous claim, **characterised in that**
if it is necessary to avoid excessive inrush currents, said **n** compressors **Cp** are activated according to known procedures adapted to the purpose.

11. **Managing method** of a system **(S.HP)** according to the previous claim, **characterised in that**
said procedures adapted to avoid excessive inrush currents consist of starting each of said compressors (**Cp**) keeping it at a frequency of 30Hz for at least 3 minutes.

12. **Managing method** of a system **(S.HP)** according to any previous claim, **characterised in that**

    a) all said **n** compressors **Cp** of the said group (**Gn**) are collected in one or more sub-assemblies (**SGn', SGn", ...**) each comprising compressors (**Cp**) of identical or substantially identical type,
    b) for each of said sub-assemblies (**SGn', SGn", ...**) a same broken line is determined **(sp.SGn)** representative of the relation between frequency **FR** and corresponding **Oper.ratio** occurring for the same sub-assemblies (**SGn', SGn", ...**),
    c) each of said **m** compressors (**Cp**) when engaged, to provide the desired value **Oper.ratio** is operated at the operating frequency **FR** determined by the broken line (**sp.SGn**) specific for the sub-assembly (**SGn', SGn", ...**) which said compressor (**Cp**) belongs to.

13. **Managing method** of a system **(S.HP)** according to any previous claim, **characterised in that**
at least when said **m** available compressors vary or if said common operating frequency or if said common operating frequency **FR.oper** exeeds said maximum common efficiency lower limit **FR FR.min.lim.Eff** and maximum efficiency upper limit **FR FR.max.lim.Eff** the steps c) and d) of claim 1 are repeated.

14. **Managing method** of a system **(S.HP)** according to any previous claim from 4 onwards, **characterised in that**
if the number **n** of said compressors **Cp** is > 2, said **Min.turnover.level** is replaced by a value

$$\textit{Min.turnover.level.var} = \textit{Max.turnover.level. } (n-1)/n$$

15. **Managing method** of a system **(S.HP)** according to any previous claim, **characterised in that**
said managing apparatus (**CM**) of said system **(S.HP)** obtains the value of the said load **W.req(t)** required at the instant **t** by said utility **UT** from the product **W.req(t) = k.UT. T.target(t)** where **k.UT** is a predetermined constant characteristic of the utility.

16. **Managing method** of a system **(S.HP)** according to any previous claim, excluding 15, **characterised in that**

    d) said system **(S.HP)** further comprises a flow meter adapted to evaluate the flow rate **G(t)** of the said heat transfer fluid (**Th.v.1**; **Th.v.2**) that serves directly the utility;
    **and in that**
    e) a value representative of said load **W.req(t)** at the moment **t** is provided by the product **C. ∫ G(t). [T.target(t) - T.eff(t)]. d**t
    f) where **C** and **G(t)** are respectively equal to the thermal capacity and to the flow rate at the moment **t** of the said between the heat transfer fluids (**Th.v.1**) or (**Th.v.2**) of which said temperature **T.eff(t)** is measured.

17. **Managing method** of a system **(S.HP)** according to any previous claim,
**characterised in that**
said managing apparatus (**CM**) of said system **(S.HP)** knows the value of the operating power **W.oper** actually output through a sensor (**S**) placed at the delivery of the said heat transfer fluids (**Th.v.1**) or (**Th.v.2**) that sends it a signal representative of the delivery temperature **T.eff(t).**

18. **Managing method** of a system **(S.HP)** according to any previous claim,
**characterised in that**
said system **(S.HP)** further comprises a heat generator composed of one or more fuel boilers **WHB** and one or more electrical elements **EHE. characterised in that** the following steps are provided

a. the value of the integral **T(t).dt = f[T.target(t) - T.eff(t)].dt** is calculated from an initial instant **t.delay** to the current moment **t** and is considered as representative of a power deficit **W.deficit(t)** between said load **W.req(t)** required at the instant **t** and the total output power by said **m** compressors **W.max.Gm,** where said initial instant **t.delay** starting therefrom the deviation between **T.target(t)** and **T.eff(t)** is late to reduce;
b. one or more of said elements (**WHB; EHE**) activate up to the substantial coverage of the said load **W.req(t)** giving priority to those of said elements (**WHB, EHE**) covering the greatest part of said power deficit **W.deficit(t)**
c. as an alternative to point (b) priority is given to the generators powered by energy sources that are currently cheaper.

19. **Managing method** of a system **(S.HP)** according to any previous claim, and
**characterised in that**

said system **(S.HP)** further comprises

- bodies **WH** belonging to user utilities **UT.ult** unrelated to said utility **UT**
- and one or more of said heat pumps **HP** is a heat pump (**HPwh**) dedicated, when requested, only to the heating of said further utilities **UT**.ult

**and in that**
those among the said compressors **Cp** comprised in said heat pumps (**HPwh**), while these are dedicated to said further utilities **UT.ult**, are declared as unavailable for the service of said utility **UT**.

20. **Managing method** of a system **(S.HP)** according to any previous claim from 12 on,
**characterised in that**
each of said sub-assemblies (**SGn'**, **SGn"**, ...) is assigned to a fixed fraction of said power **W.req(t)** to be output

21. **Managing method** of a system **(S.HP)** according the previous claim,
**characterised in that**
said fractions assigned to said sub-assemblies (**SGn'**, **SGn"**, ...) are proportional to the maximum powers output by each of them.

22. **Managing method** of a system **(S.HP)** according to claim 11 to 18
**characterised in that**

- a hierarchy of said sub-assemblies (**SGn'**, **SGn"**, ...) is established, from the more to the less powerful
- the most powerful of said sub-assemblies (**SGn'**, **SGn"**, ...) is brought to a frequency **FR** as close as possible to its maximum efficiency frequency **FR.max.Eff.Gn** which corresponds to a corresponding fraction of assured power of the total **W.req(t)** to be provided and the residual quota of power to be assured is recorded,
- the subsequent sub-assemblies (**SGn'**, **SGn"**, ...) are provided with the same criterion, by assigning to each further sub-assembly (**SGn'**, **SGn"**, ...) in the hierarchy the closest possible operating frequency **FR** to its **FR.max.Eff.Gn** and recording again the residual power to be ensured up to the assignment of the last residual power to the last of said sub-assemblies (**SGn'**, **SGn"**...).

**Patentansprüche**

1. **Verwaltungsverfahren** eines Systems **(S.HP)**, das eine Gruppe von Kältemaschinen (**HP**) aufweist, das dazu dient, deren Effizienz zu verbessern,

wobei die Kältemaschinen (**HP**)

- thermische Energie zur Bereitstellung von Heizung oder Kühlung an den Versorger (**UT**) liefern, der eine thermische Last der Leistung **W.req(t)** benötigt, die im Laufe der Zeit **t** variabel ist,
- zu diesem Zweck thermische Energie mit der primären Wärmeträgerflüssigkeit (**Th.v.1**) austauschen,

- wobei die Lieferung der Energie entweder direkt über die primäre Wärmeträgerflüssigkeit (**Th.v.1**) oder über den Wärmetauscher (**HE**) mit einer sekundären Wärmeträgerflüssigkeit (**Th.v.2**) erfolgt,

- gemeinsam eine Gruppe (**Gm**) von **m** Rotationskompressoren (**Cp**) verwenden, die alle mit der gleichen Netzspannung **V** betrieben werden, die nach Anzahl und Größe ausgewählt werden, die geeignet sind, gemeinsam eine maximale Leistung **W.max.Gm** zu liefern, die der thermischen Last **W.req(t)** mindestens bis zu ihrem Wert **W.req.max** entsprechen kann,

wobei jeder k-te der **m** Rotationskompressoren (**Cp**)

- spezifische funktionelle Merkmale aufweisen kann,
- entsprechend der Konfiguration des Systems individuell aus der Gruppe (**Gm**) ausgewählt werden kann, um zur Bildung aller möglichen Kombinationen von Untergruppen (**Gn**) von **n** der **m** Kompressoren (**Cp**) beizutragen, die erforderlich sind, um der thermischen Last **W.req(t)** zu einem Zeitpunkt **t** bis zur maximalen Ausgangsleistung **W.max.Gm** zu entsprechen,
- mit einer variablen Betriebsrotationsfrequenz **FR** arbeitet,
- seine Betriebsleistung **W.oper** erzeugt, die mit der Betriebsfrequenz **FR** bis zu seiner maximalen Betriebsleistung **W.max.k** steigt, die bei einer maximalen Betriebsfrequenz **FR.max.oper.k** abgegeben wird,
- seinen eigenen Hubraum **cc.k** aufweist,
- eine Leistung hat, die durch eine eigene Kurve (**cu.k**) dargestellt wird, die auf einer kartesischen Koordinatenebene [**FR** (ordinate) - **Oper.ratio** (abscissa)] die Beziehung zwischen der Betriebsfrequenz **FR** und einem Verhältnis **Oper.ratio = W.oper/ W.max.k** angibt, das gleich dem Verhältnis zwischen der Betriebsleistung **W.oper** und der maximalen Leistung **W.max.k** ist,

- wobei die Kurve (**cu.k**)
- eine Wende an den Koordinaten [**FR.max.Eff.k** - **Opt.output.power.k**] aufweist, wobei **FR.max.Eff.k** die Frequenz **FR** ist, die dem Betriebszustand bei dem maximalen Wirkungsgrad entspricht, und **Opt.output.power.k** das Verhältnis **Oper.ratio = W.max.eff.k / W.max.k** ist, wobei **W.max.eff.k** die Leistungsabgabe bei maximalem Wirkungsgrad bei der Frequenz **FR.max.Eff.k** ist,
- und durch eine gestrichelte Linie (**sp.k**) angenähert wird, die aus drei aufeinanderfolgenden Segmenten besteht, die jeweils durch ihre Enden [**V1.k**, **V2.k**], [**V2.k**, **V3.k**], [**V3.k**, **V4.k**] identifiziert werden, die die Eckpunkte (**V1.k**, **V2.k**, **V3.k**, **V4.k**) der gestrichelten Linie (**sp.k**) bilden, wobei die Eckpunkte, die die besonderen Grenzbetriebsbedingungen identfizieren, jeweils für die Ordinate **FR** und die Abszisse **Oper.ratio** die Parameter mit zunehmendem Wert

[**FR.min.oper.k** - **0%**],
[**FR.min.lim.Eff.k** - **Min.turnover.level.k**],
[**FR.max.lim.Eff.k** - **Max.turnover.level.k**],
[**FR.max.oper.k** - **100%**] aufweisen,
wobei
**FR.min.oper.k** und **FR.max.oper.k** jeweils die minimal und maximal zulässigen Betriebsfrequenzen sind,
**FR.min.lim.Eff.k** und **FR.max.lim.Eff.k** jeweils die minimale und maximale Frequenz sind, innerhalb derer der Wirkungsgrad als hinreichend nahe an dem maximal erreichbaren Wirkungsgrad angesehen wird, innerhalb derer der Wirkungsgrad als ausreichend nahe an dem maximal erreichbaren Wirkungsgrad angesehen wird, der bei den oben genannten Koordinaten [**FR.max.Eff.k** - **Opt.output.power.k**] auftritt, und innerhalb der entsprechenden Werte davon **Oper.ratio = Min.turnover.level.k, Max.turnover.level.k** die Ausgangsleistung des Kompressors (**Cp**) vorzugsweise begrenzt sein sollte,

und wobei jede der Untergruppen (**Gn**) mit einem Gesamthubraum (**cc.Gn**) und einer maximalen Gesamtleistung verbunden ist, die jeweils gleich der Summe der Hubräume **cc.k** und der Summe der Leistungen **W.max.k** jedes k-ten Kompressors (**Cp**) sind, der zu der Untergruppe (**Gn**) gehört,

und wobei das System (**S.HP**) eine Verwaltungsvorrichtung (**CM**) aufweist, die mindestens dazu bestimmt ist, den Wirkungsgrad davon bei der Stromversorgung der thermischen Last **W.req(t)**durch Auswahl und Aktivierung einer geeigneten Untergruppe (**Gn**) von **n** (mit $1 \leq n \leq m$) der **m** Rotationskompressoren (**Cp**) zu verbessern, die in der Gruppe (**Gm**) enthalten sind, indem jeder der **k** Rotationskompressoren (**Cp**) der geeigneten Untergruppe (**Gn**) mit der Frequenz **FR** so nahe wie möglich an dem maximalen Wirkungsgrad **FR.max.Eff.k** betrieben wird,

**wodurch das Verwaltungssystem dadurch gekennzeichnet ist, dass** für die Auswahl der geeigneten Untergruppe (**Gn**) der möglichen **n** der **m** Rotationskompressoren (**Cp**)

a) eine gestrichelte Linie (**sp.Gm**) erstellt wird, die im Wesentlichen repräsentativ für die Leistung aller Kompressoren (**Cp**) ist, die zu der Gruppe (**Gm**) gehören, indem nach Kriterien, die die Repräsentativität der gestrichelten Linie (**sp.Gm**) für die Zwecke der Verfahrens rechtfertigen, bestimmt werden:

a.1) die Werte der Koordinaten [**FR, Oper.ratio**] ihrer Eckpunkte **V1, V2, V3, V4**, die homolog zu den Eckpunkten **V1.k V2.k, V3.k, V4.k** der gestrichelten Linien (**sp.k**) sind,

a.2) und der Wert der Frequenz **FR** mit maximalem Wirkungsgrad **FR.max.Eff**, der zwischen den Frequenzen **FR.min.lim.Eff** und **FR.max.lim.Eff** liegt, die dem Verhältnis **Oper.ratio = Opt.output.power** entsprechen, bei dem die Leistungsabgabe bei maximalem Wirkungsgrad auftritt,

b) jedem der Hubräume **cc.k** der Kompressoren (**Cp**) ein maximaler konventioneller Leistungswert **W.max.k\* = R.W.cc . cc.k** zugeordnet wird, wobei **R.W.cc** ein vorgegebener Proportionalitätsfaktor ist, der für jeden der Kompressoren (**Cp**) gleich ist, so dass auch jeder der möglichen Untergruppen (**Gn**), einschließlich der Gruppe (**Gm**), eine entsprechende konventionelle Leistung **W.max.Gn\* = R.W.cc . cc.Gn** zugeordnet wird,

c) für die Bereitstellung der thermischen Energie **W.req(t) $\leq$ W.req.max**

c.1) der Hubraum **cc.min** berechnet wird, der einer konventionellen thermischen Energie entspricht, die gleich der thermischen Last **W.req(t)** oder der maximalen Quote der Last ist, die gemäß dem Verhältnis **cc.min = W.req(t) / R.W.cc** erreicht werden kann,

c.2) die Untergruppe (**Gn**) von Kompressoren (**Cp**) ausgewählt und berechnet wird, die zu dem Zeitpunkt auswählbar ist, deren entsprechender Gesamthubraum **cc.Gn** derart ist, dass das Verhältnis **cc.min / cc.Gn** dem maximalen Wirkungsgradverhältnis **Opt.output.power** am nächsten kommt,

d) bei im Wesentlichen identischen Ergebnissen zwischen zwei oder mehr der Untergruppen **Gn** für die Zwecke des besten Wirkungsgrades, jene ausgewählt wird, die weitere Kriterien am besten erfüllt.

2. **Verwaltungsverfahren** eines Systems (**S.HP**) nach dem vorhergehenden Anspruch, **dadurch gekennzeichnet, dass**

in der gestrichelten Linie (**sp.Gm** )

die bestimmten Werte der Koordinaten [**FR-Oper.ratio**] der Eckpunkte **V1, V2, V3, V4** innerhalb des folgenden erfahrungsbedingten Wertebereichs ausgewählt werden:

- **FR.min.oper** zwischen 15 und 25Hz,
- **FR.min.oper** zwischen 115 und 125Hz,
- **Min.turnover.level** zwischen 20 % und 40 % und die entsprechende Frequenz **FR.min.lim.Eff** zwischen 40 und 55Hz,
- **Min.turnover.level** zwischen 60 % und 80 % und die entsprechende Frequenz **FR.min.lim.Eff** zwischen 65 und 80Hz,

während **Opt.output.power** und **FR.max.lim.Eff** Werte zugewiesen werden, die jeweils zwischen den Werten von **Min.turnover.level** und **Max.turnover.level** und den entsprechenden Frequenzen **FR.min.lim.Eff** und **FR.max.lim.Eff** liegen.

**3. Verwaltungsverfahren** eines Systems **(S.HP)** nach dem vorhergehenden Anspruch, **dadurch gekennzeichnet, dass**

- **FR.min.oper** gleich 20Hz ist,
- **FR.max.oper** gleich 120Hz ist,
- **Min.turnover.level** gleich 30 % ist und die entsprechende Frequenz **FR.min.lim.Eff** gleich 50Hz ist,
- **Max.turnover.level** gleich 70 % ist und die entsprechende Frequenz **FR.min.lim.Eff** gleich 70Hz ist,
- **Opt.output.power** gleich 50 % ist und die entsprechende Frequenz **FR.min.lim.Eff** gleich 60Hz ist,

**4. Verwaltungsverfahren** eines Systems **(S.HP)** nach Anspruch 1, **dadurch gekennzeichnet, dass** zum Bestimmen der Werte:

- der Koordinaten der Eckpunkte **V1, V2, V3, V4,**
- von **Oper.ratio = Opt.output.power** und der entsprechenden Frequenz **FR.max.lim.Eff**
- des vorgegebenen Proportionalitätsfaktors **R.W.cc** die Verwaltungsvorrichtung (**CM**) zunächst bei der Zusammensetzung der Gruppe (**Gm**) und jedes Mal, wenn sich diese Zusammensetzung durch Ersetzen, Hinzufügen oder Entfernen einiger der Kompressoren (**Cp**) ändert, sobald die für die Zwecke jedes k-ten der **m** Kompressoren erforderlichen Daten (**Cp**) erfasst worden sind, berechnet:
- eine gemeinsame minimale Betriebsgrenze **FR.min.oper**, die gleich dem Maximum der Werte **FR.min.oper.k** ist,
- eine gemeinsame maximale Betriebsgrenze **FR.max.oper**, die gleich dem Minimum der Werte **FR.max.oper.k** ist,
- eine Frequenz **FR** mit maximalem Wirkungsgrad **FR.max.Eff**, die gleich dem Durchschnitt der Frequenzen **FR.max.Eff.k** ist, und ein entsprechendes **Oper.ratio = Opt.output.power,** das gleich dem Verhältnis zwischen dem Durchschnitt der einzelnen Leistungen **W.max.eff.k** und dem Durchschnitt der einzelnen Leistungen **W.max.k** ist, wobei die Durchschnitte einfach oder entsprechend den Hubräumen **cc.k** der Kompressoren gewichtet sind,
- eine untere Frequenzgrenze mit maximalem Wirkungsgrad **FR.min.lim.Eff**, die gleich **FR.max.Eff - ΔFR.min** ist,
- eine obere Frequenzgrenze mit maximalem Wirkungsgrad **FR.max.lim.Eff**, die gleich **FR.max.Eff + ΔFR.max** ist,

- wobei Δ**FR.min** und Δ**FR.max** auf der Grundlage eines als akzeptabel erachteten Kompromisses zwischen der Maximierung des Wirkungsgrades und der Häufigkeit von Änderungen in den zu aktivierenden Untergruppen **Gn** ausgewählt werden,
- einen Mindestwert von **Min.turnover.level**, der gleich dem höchsten der Werte von **Min.turnover.level.k** ist,
- **Max.turnover.level**, der gleich dem niedrigsten der **WerteMax.turnover.level.k** ist, die jedem der **m** Kompressoren zugeordnet werden,
- den Gesamthubraum (**cc.Gm**), der gleich der Summe der Hubräume **cc.k** von jedem der Kompressoren (**Cp**) ist,
- und die tatsächlich abgegebene maximale Betriebsleistung **W.max.Gm**, die gleich der Summe der **W.max.k** ist,
- der Proportionalitätsfaktor, der **R.W.cc** genannt wird, der gleich dem Verhältnis zwischen der maximalen Leistung **W.max.Gm** und dem Gesamthubraum (**cc.Gm**) ist.

**5. Verwaltungsverfahren** eines Systems **(S.HP)** nach einem der vorhergehenden Ansprüche, **dadurch gekennzeichnet, dass,** wenn die erforderliche Last **W.req(t)** ≤ der maximalen Leistung **W.max.Gm** ist, die von allen Kompressoren abgegeben wird, dann mindestens bei jedem Start des Kältemaschinensystems **(S.HP)** die folgenden Schritte ausgeführt werden:

a) der Anteil **req.W.ratio** wird als Verhältnis zwischen der angeforderten Leistung **W.req(t)** und der insgesamt lieferbaren Leistung **W.max.Gm** berechnet:

$$req.W.ratio = W.req(t)/W.max.Gm$$

b) der Referenzhubraum **cc.Rif** als Produkt von **req.W.ratio** für **cc.Gm** wird berechnet:

$$cc.Rif = req.W.ratio \, . \, cc.Gm$$

c) der Gesamthubraum **cc.Gn** wird von allen möglichen Untergruppen (**Gn**) von **n** Kompressoren berechnet,
d) für jede Untergruppe (**Gn**) wird das folgende Verhältnis berechnet

$$Ratio.cc.Gn = cc.Gn / cc.Rif$$

e) die Untergruppe (**Gn**), deren Verhältnis **Ratio.cc.Gn** näher am Wert des maximalen Wirkungsgrades **FR.max.Eff** liegt, wird ausgewählt und bei mehreren Untergruppen (**Gn**), die in Bezug auf den Wirkungsgrad im Wesentlichen gleich sind, wird jene unter den Untergruppen (**Gn**) ausgewählt, die weitere diskretionäre Kriterien erfüllt,
f) für die zu aktivierende Untergruppe (**Gn**) wird eine gemeinsame Betriebsfrequenz **FR.oper** nach den folgenden Kriterien ausgewählt:

f.1) wenn **Ratio.cc.Gn** in den Bereich **W MIN** (% der Leistungsabgabe auf dem Maximum zwischen 0 % und **Min.turnover.level** fällt, wird die Betriebsfrequenz **FR.oper** aus dem Verhältnis

$$(FR.oper - 20)/(FR.min.lim.Eff - 20) =$$

$$= (ratio.cc.1 - 0)/(Min.turnover.level - 0) \text{ erhalten,}$$

wobei, wenn **FR.oper** $\leq$ **FR.min.oper** ist, dann die zu startende Untergruppe (**Gn**) leer ist,
f.2) wenn **Ratio.cc.Gn** in den Bereich **W INT** (% der Leistungsabgabe auf dem Maximum zwischen **Min.turnover.level** und **Max.turnover.level** fällt, wird die Betriebsfrequenz **FR.oper** aus dem Verhältnis

$$(FR.oper - FR.min.lim.Eff)/(FR.max.lim.Eff - FR.min.lim.Eff) =$$

$$= (Ratio.cc.Gn - Min.turnover.level)/(Max.turnover.level - Min.turnover.level)$$

erhalten,
f.3) wenn **Ratio.cc.Gn** in den Bereich **W MAX** fällt, wird die Betriebsfrequenz **FR MAX** aus dem Verhältnis

$$(FR.oper - FR.max.lim.Eff)/(FR.max.oper - FR.max.lim.Eff) =$$

$$= (ratio.cc.Gm - Max.turnover.level)/(100 - Max.turnover.level)$$

erhalten.

g) zuletzt werden, wenn die ausgewählte zu aktivierende Untergruppe (**Gn**) von der möglichen Untergruppe (**Gn**), die bereits in Betrieb ist, verschieden ist, alle Kompressoren n der gleichen Untergruppe (**Gn**) auf die gemeinsame Betriebsfrequenz **FR.oper** gebracht,
wenn hingegen die erforderliche Last **W.req(t)** größer als die maximale Leistung **W.max.Gm** ist, die von den Kompressoren insgesamt abgegeben wird, dann
h) ist die ausgewählte Untergruppe (**Gn**) gleich der Gruppe **Gm** aller **m** verfügbaren Kompressoren **Cp**, die mit der gleichen gemeinsamen maximalen Betriebsfrequenz **FR.max.oper** gestartet worden sind,
i) und wenn die Last **W.req(t)** zum Heizen ist, werden ein oder mehrere herkömmliche Wärmeerzeuger **WHB** und/oder **EHE** solange aktiviert, bis sie eine Leistung **W.req(t)** - **W.max.Gm** abgeben.

6. **Verwaltungsverfahren** eines Systems **(S.HP)** nach einem der vorhergehenden Ansprüche mit Ausnahme von Anspruch 5,
**dadurch gekennzeichnet, dass**

a) die Zieltemperaturen **T.target(t)** mit den seit dem Startzeitpunkt **t** = 0 tatsächlich gemessenen Temperaturen **T.eff(t)** verglichen werden, indem der Fehler **e(t)** = **T.target(t)** - **T.eff(t)** berechnet wird,

b) gemäß den PID Regelungsverfahren einer Korrekturfunktion **C(t)** ein Wert zugewiesen wird, der gleich der Summe des Fehlers **e(t)** ist, wobei das Integral davon und die Ableitung davon mit den entsprechenden Konstanten **kp, ki, kd** nach der Beziehung

$C(t) = kp . e(t) + ki . \int e(t) . dt + kd . de(t)/dt$ multipliziert werden,

c) ein vorgegebener Hubraum $\Delta$.**cc.Gn**, der gewählt wird, um eine Leistung $\Delta$.**W** zu gewährleisten, die gleich der fehlenden/überschüssigen Leistung ist, die von der Einheit der gleichen Korrektur **C(t)** angegeben wird, und die bei Betrieb zu dem Hubraum der Untergruppe (**Gn'**) hinzugefügt/davon entzogen werden muss, um sie durch eine neue Untergruppe (**Gn"**) zu ersetzen, die dazu neigt, die Korrektur **C(t)** unter Bedingungen zu erfüllen, die denen des maximalen Wirkungsgrades so nahe wie möglich kommen, dieser Korrektur **C(t)** zugewiesen wird,

d) wenn durch Anwenden der größtmöglichen Korrektur **C(t)** der Fehler **e(t)** nicht behoben wird und die Last **W.req(t)** zum Heizen dient, werden ein oder mehrere herkömmliche Wärmeerzeuger **WHB** und/oder **EHE** mit ausreichender Leistung aktiviert, um den Fehler **e(t)** zu beheben.

7. **Verwaltungsverfahren** eines Systems **(S.HP)** nach einem der vorhergehenden Ansprüche,
**dadurch gekennzeichnet, dass**
wenn zwei oder mehr der Untergruppen (**Gn**) im Wesentlichen die gleichen Ergebnisse liefern jenes zusätzliche anzuwendende Auswahlkriterium zum Zwecke eines besseren Wirkungsgrades bevorzugt wird, das eine der mehreren der folgenden Bedingungen erfüllt:

a) die Untergruppe (**Gn**), umfassend eine geringere Anzahl von **n** Kompressoren (**Cp**),
b) die mögliche Untergruppe (**Gn**), die keine Kompressoren (**Cp**) umfasst, die nicht verfügbar sein könnten, da sie dem Dienst anderer vorrangiger Versorger zugewiesen werden können,
c) die Untergruppe (**Gn**), umfassend Kompressoren (**Cp**) mit weniger Betriebsstunden,
d) als Alternative zu Punkt c, e) die Untergruppe (**Gn**), die Kompressoren (**Cp**) mit mehr Betriebsstunden umfasst.

8. **Verwaltungsverfahren** eines Systems **(S.HP)** nach einem der vorhergehenden Ansprüche,
**dadurch gekennzeichnet, dass**
in der Untergruppe (**Gn**), die ausgewählt wurde, um aktiviert zu werden, einer oder mehrere der Kompressoren (**Cp**) durch Kompressoren (**Cp**) mit weniger Betriebsstunden im Vergleich zu all den anderen Kompressoren (**Cp**) ersetzt wird oder werden, wobei ein solches Ersetzungsverfahren nach eigenem Ermessen durch den Hersteller oder Betreiber des Systems S.HP manuell aktiviert/deaktiviert werden kann.

9. **Verwaltungsverfahren** eines Systems **(S.HP)** nach einem der vorhergehenden Ansprüche ab Anspruch 4,
**dadurch gekennzeichnet, dass**
die Werte $\Delta$**FR.max** und $\Delta$**FR.min** gleich 10Hz sind

10. **Verwaltungsverfahren** eines Systems **(S.HP)** nach einem der vorhergehenden Ansprüche,
**dadurch gekennzeichnet, dass**
wenn es notwendig ist, übermäßige Einschaltströme zu vermeiden, die **n** Kompressoren **Cp** nach bekannten Verfahren, die für den Zweck geeignet sind, aktiviert werden.

11. **Verwaltungsverfahren** eines Systems **(S.HP)** nach dem vorhergehenden Anspruch,
**dadurch gekennzeichnet, dass**
die Verfahren, die geeignet sind, übermäßige Einschaltströme zu vermeiden, darin bestehen, jeden der Kompressoren (**Cp**) zu starten und ihn mindestens 3 Minuten lang auf einer Frequenz von 30 Hz zu halten.

12. **Verwaltungsverfahren** eines Systems **(S.HP)** nach einem der vorhergehenden Ansprüche,
**dadurch gekennzeichnet, dass**

a) alle **n** Kompressoren **Cp** der Gruppe (**Gn**) in einer oder mehreren Unterbaugruppen (**SGn', SGn"**, ...) gesammelt werden, die jeweils Kompressoren (**Cp**) von identischem oder im Wesentlichen identischen Typs umfassen,
b) für jede der Unterbaugruppen (**SGn', SGn"**, ...) eine gleiche gestrichelte Linie bestimmt wird (**sp.SGn**), die repräsentativ für die Beziehung zwischen der Frequenz **FR** und dem entsprechenden **Oper.ratio** ist, das für die gleichen Unterbaugruppen (**SGn', SGn"**, ...) auftritt,
c) jeder der **m** Kompressoren (**Cp**), wenn er in Betrieb ist, zur Bereitstellung des gewünschten Werts **Oper.ratio** mit der Betriebsfrequenz **FR** betrieben wird, die durch die gestrichelte Linie (**sp.SGn**) bestimmt wird, die für die Unterbaugruppe (**SGn'**, **SGn"**, ...) spezifisch ist, zu der der Kompressor (**Cp**) gehört.

13. **Verwaltungsverfahren** eines Systems (**S.HP**) nach einem der vorhergehenden Ansprüche,
**dadurch gekennzeichnet, dass**
mindestens wenn die **m** verfügbaren Kompressoren variieren oder wenn die gemeinsame Betriebsfrequenz oder wenn die gemeinsame Betriebsfrequenz **FR.oper** den unteren Grenzwert des maximalen gemeinsamen Wirkungsgrads **FR FR.min.lim.Eff** und den oberen Grenzwert des maximalen Wirkungsgrads **FR FR.max.lim.Eff** überschreitet, die Schritte c) und d) von Anspruch 1 wiederholt werden.

14. **Verwaltungsverfahren** eines Systems (**S.HP**) nach einem der vorhergehenden Ansprüche ab Anspruch 4,
**dadurch gekennzeichnet, dass**
wenn die Anzahl **n** der Kompressoren **Cp** > 2 ist, das **Min.turnover.level** durch einen Wert
***Min.turnover.level.var = Max.turnover.level. (n - 1)/n*** ersetzt wird.

15. **Verwaltungsverfahren** eines Systems (**S.HP**) nach einem der vorhergehenden Ansprüche,
**dadurch gekennzeichnet, dass**
die Verwaltungsvorrichtung (**CM**) des Systems (**S.HP**) den Wert der Last **W.req(t)**, die zum Zeitpunkt **t** von dem Versorger **UT** benötigt wird, aus dem Produkt **W.req(t) = k.UT T.target(t)** erhält, wobei **k.UT** eine vorbestimmte konstante Eigenschaft des Versorgers ist.

16. **Verwaltungsverfahren** eines Systems (**S.HP**) nach einem der vorhergehenden Ansprüche mit Ausnahme von 15,
**dadurch gekennzeichnet, dass**

d) das System (**S.HP**) ferner einen Durchflussmesser aufweist, der geeignet ist, die Durchflussrate **G(t)** der Wärmeträgerflüssigkeit (**Th.v.1**; **Th.v.2**) zu ermitteln, die direkt dem Versorger dient,
**und dass**
e) ein Wert, der repräsentativ für die Last **W.req(t)** zum Zeitpunkt **t** ist, durch das Produkt **C.∫G(t).[T.target(t) - T.eff(t)].** *dt* geliefert wird,
f) wobei **C** und **G(t)** jeweils gleich der Wärmeleistung und der Durchflussrate zum Zeitpunkt **t** der Wärmeträgerflüssigkeit unter den Wärmeträgerflüssigkeiten (**Th.v.1**) oder (**Th.v.2**) ist, wovon die Temperatur **T.eff(t)** gemessen wird.

17. **Verwaltungsverfahren** eines Systems (**S.HP**) nach einem der vorhergehenden Ansprüche,
**dadurch gekennzeichnet, dass**
die Verwaltungsvorrichtung (**CM**) des Systems (**S.HP**) den Wert der tatsächlich abgegebenen Betriebsleistung **W.oper** über einen Sensor (**S**) kennt, der an der Abgabe der Wärmeübertragungsflüssigkeiten (**Th.v.1**) oder (**Th.v.2**) angebracht ist, der ihr ein Signal sendet, das für die Abgabetemperatur **T.eff(t)** repräsentativ ist.

18. **Verwaltungsverfahren** eines Systems (**S.HP**) nach einem der vorhergehenden Ansprüche,
**dadurch gekennzeichnet, dass**

das System ferner einen Wärmeerzeuger aufweist, der aus einem oder mehreren Brennstoffkesseln **WHB** und einem oder mehreren elektrischen Elementen **EHE** besteht,
**dadurch kennzeichnet, dass** die folgenden Schritte vorgesehen sind

a. der Wert des Integrals **T(t).dt = ∫[T.target(t) - T.eff(t)].dt** wird von einem anfänglichen Zeitpunkt **t.delay** bis zum aktuellen Zeitpunkt **t** berechnet und gilt als repräsentativ für ein Leistungsdefizit **W.deficit(t)** zwischen der zum Zeitpunkt **t** erforderlichen Last **W.req(t)** und der Gesamtausgangsleistung der **m** Kompressoren **W.max.Gm**, wobei ab diesem anfänglichen Zeitpunkt **t.delay** die Abweichung zwischen **T.target(t)** und **T.eff(t)** verspätet reduziert wird,
b. eines oder mehrere der Elemente (**WHB; EHE**) werden bis zur wesentlichen Abdeckung der Last **W.req(t)** aktiviert, wobei denjenigen der Elemente (**WHB, EHE**) Vorrang eingeräumt wird, die den größten Teil des Leistungsdefizits **W.deficit(t)** abdecken,
c. alternativ zu Punkt b) wird den Generatoren Vorrang eingeräumt, die mit Energiequellen betrieben werden, die derzeit günstiger sind.

19. **Verwaltungsverfahren** eines Systems (**S.HP**) nach einem der vorhergehenden Ansprüche und
**dadurch gekennzeichnet, dass**

das System **(S.HP)** ferner aufweist

- Körper **WH**, die zu Benutzer-Versorgern **UT.ult** gehören, die mit dem Versorger **UT** nicht in Verbindung stehen,
- und eine oder mehrere der Wärmepumpen **HP** eine Wärmepumpe **(HPwh)** ist, die bei Bedarf nur für das Heizen des weiteren Versorgers **UT.ult** bestimmt ist,

**und dass**
jene unter den Kompressoren **Cp**, die in den Wärmepumpen **(HPwh)** enthalten sind, für den Betrieb des Versorgers **UT** als nicht verfügbar erklärt werden, während sie für die weiteren Versorger **UT.ult** bestimmt sind.

20. **Verwaltungsverfahren** eines Systems nach einem der vorhergehenden Ansprüche ab Anspruch 12,
**dadurch gekennzeichnet, dass**
jeder der Unterbaugruppen **(SGn', SGn"**, ...) ein fester Anteil der abzugebenden Leistung **W.req(t)** zugewiesen wird.

21. **Verwaltungsverfahren** eines Systems **(S.HP)** nach dem vorhergehenden Anspruch,
**dadurch gekennzeichnet, dass**
die Anteile, die den Unterbaugruppen **(SGn', SGn"**, ...) zugewiesen werden, proportional zu den maximalen Leistungen sind, die von jeder von ihnen abgegeben wird.

22. **Verwaltungsverfahren** eines Systems nach Anspruch 11 bis 18,
**dadurch gekennzeichnet, dass**

- eine Hierarchie der Unterbaugruppen **(SGn', SGn"**, ...) von den leistungsstärkeren zu den leistungsschwächeren erstellt wird,
- die leistungsstärkste der Unterbaugruppen **(SGn', SGn"**, ...) auf eine Frequenz **FR** gebracht wird, die so nah wie möglich an ihrer Frequenz mit maximalem Wirkungsgrad **FR.max.Eff.Gn** liegt, die einem entsprechenden Anteil der gesicherten Leistung der gesamten **W.req(t)** entspricht, die zu liefern ist, und die zu sichernde restliche Quote der Leistung aufgezeichnet wird,
- die nachfolgenden Unterbaugruppen **(SGn', SGn"**, ...) mit dem gleichen Kriterium versehen werden, indem jeder weiteren Unterbaugruppe **(SGn', SGn"**, ...) in der Hierarchie die Betriebsfrequenz **FR** zugewiesen wird, die ihrer **FR.max.Eff.Gn** am nächsten kommt, und die zu sichernde Restleistung bis zur Zuordnung der letzten Restleistung zu der letzten der Unterbaugruppen **(SGn', SGn"**...) erneut aufgezeichnet wird.

## Revendications

1. **Méthode de gestion** d'un système **(S.HP)** comprenant un groupe de machines frigorifiques **(HP)** visant à en améliorer l'efficacité où lesdites machines frigorifiques **(HP)**

- fournissent de l'énergie thermique pour chauffer ou refroidir la même utilité **(UT)** qui a besoin d'une charge thermique de puissance **W.req(t)** variable au cours du temps **t**,
- à cette fin, elles échangent de la puissance thermique avec le même fluide caloporteur primaire **(Th.v.1)**,

  - cette alimentation électrique se fait soit directement par le biais du fluide caloporteur primaire **(Th.v.1)**, soit par l'intermédiaire de l'échangeur de chaleur **(HE)** avec un fluide caloporteur secondaire **(Th.v.2)**,

- utilisant collectivement un groupe **(Gm)** de **m** compresseurs rotatifs **(Cp)**, fonctionnant tous à la même tension de réseau **V**, sélectionnés par leur quantité et leur taille, adaptés pour délivrer collectivement une puissance maximale **W.max.Gm** qui peut satisfaire ladite charge thermique **W.req(t)** au moins jusqu'à sa valeur **W.req.max**,

où chaque k-ième de ces **m** compresseurs rotatifs **(Cp)**

- peuvent avoir des caractéristiques fonctionnelles spécifiques,
- peuvent être sélectionnés individuellement dans ledit groupe **(Gm)**, selon la configuration du système, pour contribuer à la formation de toutes les combinaisons possibles de sous-groupes **(Gn)** de **n** desdits **m** compresseurs **(Cp)** nécessaires pour répondre à ladite charge thermique **W.req(t)** à un moment **t** jusqu'à ladite puissance de sortie maximale **W.max.Gm**,

- fonctionne à une fréquence de rotation variable **FR**,
- génère sa puissance de fonctionnement **W.oper** qui augmente avec ladite fréquence de fonctionnement **FR** jusqu'à sa puissance maximale **W.max.k** à une fréquence de fonctionnement maximale **FR.max.oper.k**,
- a sa propre cylindrée **cc.k**,
- a des performances représentées par sa propre courbe **(cu.k)** qui indique, sur un plan de coordonnées cartésiennes **[FR (ordonnée) - Oper.ratio (abscisse)]**, le rapport entre ladite fréquence de fonctionnement **FR** et un rapport **Oper.ratio = W.oper/ W.max.k** égal au rapport entre ladite puissance de fonctionnement **W.oper** et ladite puissance maximale **W.max.k**,

    - où ladite courbe **(cu.k)**

        - a une inflexion aux coordonnées **[FR.max.Eff.k-Opt.output.power.k]** où **FR.max.Eff.k** est la fréquence **FR** qui correspond à la condition de fonctionnement au rendement maximum et **Opt.output.power.k** est le rapport **Oper.ratio = W.max.eff.k / W.max.k** où **W.max.eff.k** est la puissance de sortie au rendement maximal à ladite fréquence **FR.max.Eff.k**
        - et est approximée par une ligne discontinue **(sp.k)** constituée de trois segments consécutifs identifiés respectivement par leurs extrémités **[V1.k, V2.k],[V2.k, V3.k],[V3.k, V4.k]** qui constituent les sommets **(V1.k, V2.k, V3.k, V4.k)** de ladite ligne discontinue **(sp.k)**, lesdits sommets identifiant les conditions limites particulières de fonctionnement ayant respectivement pour ladite ordonnée **FR** et abscisse **Oper.ratio** les paramètres de valeur croissante

            **[FR.min.oper.k - 0 %]**,
            **[FR.min.lim.Eff.k - Min.turnover.level.k]**,
            **[FR.max.lim.Eff.k - Max.turnover.level.k]**,
            **[FR.min.oper.k - 100 %]**
            où
            **FR.min.oper.k** et **FR.max.oper.k** sont respectivement les fréquences de fonctionnement minimale et maximale autorisées,
            **FR.min.lim.Eff.k** et **FR.max.lim.Eff.k** sont respectivement la fréquence minimale et la fréquence maximale à l'intérieur desquelles le rendement est considéré comme suffisamment proche du maximum pouvant être obtenu à l'intérieur desquelles le rendement est considéré comme suffisamment proche du maximum pouvant être obtenu aux coordonnées susmentionnées **[FR.max.Eff.k - Opt.output.power.k]** et à l'intérieur des valeurs correspondantes où **Oper.ratio = Min.turnover.level.k, Max.turnover.level.k** la puissance de sortie dudit compresseur **(Cp)** est préférentiellement limitée,

et où chacun de ces sous-groupes **(Gn)** est associé à une cylindrée totale **(cc.Gn)** et à une puissance totale maximale respectivement égale à la somme desdites cylindrées **cc.k** et à la somme desdites puissances **W.max.k** de chaque k-ième compresseur **(Cp)** appartenant audit sous-groupe **(Gn)** ;
et où ledit système **(S.HP)** comprend un appareil de gestion **(CM)** qui vise au moins à améliorer son efficacité dans l'alimentation électrique de ladite charge thermique **W.req(t)** en choisissant et en activant un sous-groupe approprié **(Gn)** de **n** (avec $1 \leq n \leq m$) desdits **m** compresseurs rotatifs **(Cp)** compris dans ledit groupe **(Gm)**, en conduisant chacun desdits **k** compresseurs rotatifs **(Cp)** dudit sous-groupe approprié **(Gn)** à la fréquence **FR** la plus proche possible de ladite efficacité maximale **FR.max.Eff.k** ;
**ledit système de gestion se caractérise par le fait que** pour le choix de ce sous-groupe approprié **(Gn)** parmi les **n** possibles de ces **m** compresseurs rotatifs **(Cp)**,

    a) on construit une ligne discontinue **(sp.Gm)** qui est substantiellement représentative de la performance de tous lesdits compresseurs **(Cp)** appartenant audit groupe **(Gm)** déterminant, selon des critères qui légitiment la représentativité de la même ligne discontinue **(sp.Gm)** aux fins de la méthode :

        a.1) les valeurs des coordonnées **[FR, Oper.ratio]** de ses sommets **V1, V2, V3, V4** homologues auxdits sommets **V1.k V2.k, V3.k, V4.k** desdites lignes brisées **(sp.k)**,
        a.2) et la valeur de la fréquence **FR** de rendement maximal **FR.max.Eff**, comprise entre les fréquences **FR.min.lim.Eff** et **FR.max.lim.Eff** correspondant au rapport **Oper.ratio = Opt.output.power** auquel la puissance de sortie se produit au rendement maximal ;

b) une valeur conventionnelle de puissance maximale **W.max.k\* = R.W.cc . cc.k** est associée à chacune desdites cylindrées **cc.k** desdits compresseurs **(Cp)**, où **R.W.cc** est un rapport de proportionnalité de valeur prédéterminée, égal pour chacun desdits compresseurs **(Cp)** desorte qu'une puissance conventionnelle correspondante **W.max.Gn\* = R.W.cc . cc.Gn** est associée également à chacun desdits sous-groupes possibles **(Gn)**, y compris ledit groupe **(Gm)** ;

c) pour la fourniture de ladite puissance thermique **W.req(t) ≤ W.req.max**

c.1) la cylindrée **cc.min** correspondante à une puissance thermique conventionnelle égale à ladite charge thermique **W.req(t)** ou au quota maximum de ladite charge qu'il est possible de respecter selon la relation **cc.min = W.req(t) / R.W.cc** est calculé,

c.2) le sous-groupe **(Gn)** de compresseurs **(Cp)** sélectionnable au moment dont la cylindrée totale correspondante **cc.Gn** est telle que le rapport **cc.min / cc.Gn** est le plus proche dudit rapport d'efficacité maximale **Opt.output.power** est choisi et calculé ;

d) en cas de résultats substantiellement identiques entre deux ou plusieurs de ces sous-groupes **Gn** aux fins de la meilleure efficacité, celui qui répond le mieux à d'autres critères est choisi.

2. **Méthode de gestion** d'un système **(S.HP)** selon la revendication précédente,
**caractérisée en ce que**,

dans ladite ligne discontinue **(sp.Gm)**,
les valeurs déterminées des coordonnées **[FR-Oper.ratio]** des sommets **V1, V2, V3, V4** sont choisies dans la plage de valeurs suivante, dictée par l'expérience :

- **FR.min.oper** entre 15 et 25 Hz,
- **FR.min.oper** entre 115 et 125 Hz,
- Le **Min.turnover.level** est compris entre 20 % et 40 % et la fréquence correspondante **FR.min.lim.Eff** est comprise entre 40 et 55 Hz,
- Le **Min.turnover.level** est compris entre 60 % et 80 % et la fréquence correspondante **FR.min.lim.Eff** est comprise entre 65 et 80 Hz,

tout en attribuant à la **Opt.output.power** et à l'**FR.max.lim.Eff** des valeurs intermédiaires par rapport aux valeurs du **Min.turnover.level** et du **Max.turnover.level** respectivement et aux fréquences correspondantes **FR.min.lim.Eff** et **FR.max.lim.Eff**.

3. **Méthode de gestion** d'un système **(S.HP)** selon la revendication précédente,
**caractérisée en ce que**,

- ledit **FR.min.oper** est égal à 20 Hz,
- ledit **FR.max.oper** est égal à 120 Hz,
- ledit **Min.turnover.level** est égal à 30 % et la fréquence correspondante **FR.min.lim.Eff** est égale à 50 Hz,
- ledit **Max.turnover.level** est égal à 70 % et la fréquence correspondante **FR.min.lim.Eff** est égale à 70 Hz,
- ladite **Opt.output.power**. est égale à 50 % et la fréquence correspondante **FR.min.lim.Eff** est égale à 60 Hz,

4. **Méthode de gestion** d'un système **(S.HP)** selon la revendication 1,
**caractérisée en ce que**,

pour la détermination des valeurs de :

- les coordonnées des sommets **V1, V2, V3, V4**,
- ledit **Oper.ratio = Opt.output.power** et ladite fréquence correspondante **FR.max.lim.Eff**,
- ledit rapport de proportionnalité prédéterminé **R.W.cc**,

initialement à la composition dudit groupe **(Gm)** et à chaque fois que cette composition change par substitution, ajout, retrait de certains desdits compresseurs **(Cp)**, ledit appareil de gestion **(CM)**, après avoir acquis les données nécessaires à cet effet de chaque k-ième desdits **m** compresseurs **(Cp)**, calcule :

- une limite minimale commune de fonctionnement **FR.min.oper** égale au maximum de ces valeurs **FR.min.oper.k**,

- une limite maximale commune de fonctionnement **FR.max.oper** égale au minimum de ces valeurs **FR.max.oper.k**,

- une fréquence **FR** d'efficacité maximale **FR.max.Eff** égale à la moyenne desdites fréquences **FR.max.Eff.k** et un **Oper.ratio** correspondant = **Opt.output.power** égal au rapport entre la moyenne desdites puissances uniques **W.max.eff.k** et la moyenne desdites puissances uniques **W.max.k** où lesdites moyennes sont simples ou pondérées en fonction des cylindrées **cc.k** des mêmes compresseurs,

- une limite de fréquence inférieure d'efficacité maximale **FR.min.lim.Eff** égale à ladite **FR.max.Eff - ∆FR.min**,

- une limite supérieure de fréquence de l'efficacité maximale **FR.max.lim.Eff** égale à ladite **FR.max.Eff + ∆FR.max,**

- où lesdits ∆**FR.min** et ∆**FR.max** sont choisis sur la base de ce qui est considéré comme un compromis acceptable entre la maximisation de l'efficacité et la fréquence des changements dans les sous-groupes **Gn** à activer,

- une valeur minimale du **Min.turnover.level** égale à la plus élevée de ces valeurs de **Min.turnover.level.k**,

- **Max.turnover.level** égal à la plus faible des valeurs susmentionnées **Max.turnover.level.k** attribuée à chacun des **m** compresseurs,

- la cylindrée totale **(cc.Gm)** égale à la somme desdites cylindrées **cc.k** de chacun desdits compresseurs **(Cp)**,

- et la puissance maximale effectivement délivrée **W.max.Gm** égale à la somme de ces **W.max.k**,

- le rapport de proportionnalité appelé **R.W.cc** égal au rapport entre ladite puissance maximale **W.max.Gm** et ladite cylindrée totale **(cc.Gm)**.

5. **Méthode de gestion** d'un système **(S.HP)** selon l'une quelconque des revendications précédentes, **caractérisée en ce que** :

si ladite charge requise **W.req(t)** est ≤ à ladite puissance maximale **W.max.Gm** délivrée par l'ensemble des compresseurs, alors, au moins à chaque démarrage dudit système de machine frigorifique **(S.HP)**, les étapes suivantes sont effectuées :

a) la fraction **req.W.ratio** est calculée comme le rapport entre ladite puissance demandée **W.req(t)** et ladite puissance totale livrable **W.max.Gm** :

$$req.W.ratio = W.req(t)/W.max.Gm$$

b) la cylindrée de référence **cc.Rif** en tant que produit du **req.W.ratio** pour **cc.Gm** est calculée :

$$cc.Rif = req.W.ratio \,.\, cc.Gm$$

c) la cylindrée totale **cc.Gn** est calculée pour tous les sous-groupes possibles **(Gn)** de **n** compresseurs,

d) pour chaque sous-groupe **(Gn)**, le rapport suivant est calculé

$$Ratio.cc.Gn = cc.Gn \,/\, cc.Rif$$

e) le sous-groupe **(Gn)** dont le rapport **Ratio.cc.Gn** est le plus proche de la valeur d'efficacité maximale **FR.max.Eff** est choisi et, dans le cas de plusieurs sous-groupes **(Gn)** substantiellement équivalents en termes d'efficacité, celui qui répond à d'autres critères discrétionnaires est choisi parmi ces sous-groupes **(Gn)** ;

f) pour ledit sous-groupe **(Gn)** à activer, une fréquence de fonctionnement commune **FR.oper** est choisie selon les critères suivants :

f.1) si **Ratio.cc.Gn** se situe dans la zone **W MIN** (% de la puissance de sortie sur le maximum compris entre 0 % et **Min.turnover.level** ladite fréquence de fonctionnement **FR.oper** est obtenue à partir de la proportion

$$(FR.oper - 20)/(FR.min.lim.Eff - 20) =$$

$$= (ratio.cc.1 - 0)/(Min.turnover.level - 0)$$

où, si **FR.oper** est ≤ **FR.min.oper**, ledit sous-groupe **(Gn)** à démarrer est vide ;

f.2) si **Ratio.cc.Gn** se situe dans la zone **W INT** (% de la puissance de sortie sur le maximum compris entre **Min.turnover.level** et **Max.turnover.level** ladite fréquence de fonctionnement **FR.oper** est obtenue à partir de la proportion

$$(FR.oper - FR.min.lim.Eff)/(FR.max.lim.Eff - FR.min.lim.Eff) =$$

$$= (Ratio.cc.Gn - Min.turnover.\ level)\ /\ (Max.turnover.\ level - Min.turnover.\ level)$$

f.3) si **Ratio.cc.Gn** se situe dans la zone **W MAX** , ladite fréquence de fonctionnement **FR MAX** est obtenue à partir de la proportion

$$(FR.oper - FR.max.lim.Eff)/(FR.max.oper - FR.max.lim.Eff) =$$

$$= (ratio.cc.\textbf{Gm} - Max.turnover.level)/(100 - Max.turnover.level)$$

g) enfin, si le sous-groupe **(Gn)** sélectionné à activer est différent de l'éventuel sous-groupe **(Gn)** déjà en fonctionnement, tous les compresseurs n du même sous-groupe **(Gn)** sont amenés à la fréquence de fonctionnement commune **FR.oper** ;

si, au lieu de cela, ladite charge requise **W.req(t)** est supérieure à ladite puissance maximale **W.max.Gm** délivrée par l'ensemble des compresseurs, alors

h) le sous-groupe sélectionné **(Gn)** est égal au groupe **Gm** de tous les **m** compresseurs disponibles **Cp** qui sont démarrés à la même fréquence de fonctionnement commune maximale **FR.max.oper**

i) et, si ladite charge **W.req(t)** est destinée au chauffage, un ou plusieurs générateurs de chaleur conventionnels **WHB** et/ou **EHE** sont activés jusqu'à ce qu'ils fournissent une puissance **W.req(t) - W.max.Gm.**

6. **Méthode de gestion** d'un système **(S.HP)** selon toute revendication précédente, excluant 5, **caractérisée en ce que**

a) lesdites températures de consigne **T.target(t)** sont comparées et **T.eff(t)** effectivement lue depuis l'instant de départ **t** = 0 en calculant l'erreur **e(t) = T.target(t) - T.eff(t)**

b) selon les méthodes de régulation PID, à une fonction de correction **C(t)** est attribuée une valeur égale à la somme de l'erreur **e(t)** avec son intégrale et sa dérivée multipliée par les constantes correspondantes **kp, ki, kd** selon la relation

$$C(t) = kp.e(t) + ki.\int e(t).dt + kd.de(t)/dt$$

c) Une cylindrée prédéterminée Δ.**cc.Gn,** choisie pour assurer une puissance Δ.**W** égale à la puissance manquante/dépassante rapportée par l'entité de même correction **C(t)** et à ajouter/supprimer à la cylindrée du sous-groupe **(Gn**') au moment actif afin de le remplacer par un nouveau sous-groupe **(Gn**") qui tend à respecter ladite correction **C(t)** dans des conditions aussi proches que possible de celles de l'efficacité maximale, est associé à ladite correction **C(t)** ;

d) si, en appliquant la correction maximale **C(t)**, ladite erreur **e(t)** ne s'annule pas et que ladite charge **W.req(t)** est destinée au chauffage, un ou plusieurs générateurs de chaleur conventionnels **WHB** et/ou **EHE** d'une puissance suffisante pour annuler ladite erreur **e(t)** sont activés.

7. **Méthode de gestion** d'un système **(S.HP)** selon l'une quelconque des revendications précédentes, **caractérisée en ce que**

lesdits critères de sélection supplémentaires à adopter dans le cas où deux ou plusieurs de ces sous-groupes **(Gn)** offrent sensiblement les mêmes résultats à des fins de meilleure efficacité qu'il est préférable de satisfaire à une ou plusieurs des conditions suivantes :

a) le sous-groupe **(Gn)** comprenant un nombre inférieur de **n** compresseurs **(Cp)** ;

b) le sous-groupe éventuel **(Gn)** qui ne comprend pas les compresseurs **(Cp)** susceptibles de devenir indisponibles car pouvant être affectés au service d'autres utilités prioritaires ;

c) le sous-groupe **(Gn)** comprenant des compresseurs **(Cp)** ayant moins d'heures de fonctionnement,

d) en alternative au point c, e) le sous-groupe **(Gn)** qui comprend les compresseurs **(Cp)** ayant le plus grand nombre d'heures d'activité.

8. **Méthode de gestion** d'un système **(S.HP)** selon l'une quelconque des revendications précédentes, **caractérisée en ce que**

dans ledit dans le sous-groupe **(Gn)** choisi pour être activé, un ou plusieurs de ces compresseurs **(Cp)** sont remplacés par des compresseurs **(Cp)** ayant moins d'heures de fonctionnement que tous les autres compresseurs **(Cp)**, cette procédure de remplacement pouvant être activée/désactivée manuellement de manière discrétionnaire par le fabricant ou l'opérateur du système S.HP.

9. **Méthode de gestion** d'un système **(S.HP)** selon l'une quelconque des revendications précédentes, à partir de 4, **caractérisée en ce que**

ces valeurs $\Delta$**FR.max** et $\Delta$**FR.min** sont égales à 10 Hz.

10. **Méthode de gestion** d'un système **(S.HP)** selon l'une quelconque des revendications précédentes, **caractérisée en ce que**

s'il est nécessaire d'éviter des courants d'appel excessifs, lesdits **n** compresseurs **Cp** sont activés selon des procédures connues et adaptées à cet effet.

11. **Méthode de gestion** d'un système **(S.HP)** selon la revendication précédente, **caractérisée en ce que**

lesdites procédures adaptées pour éviter les courants d'appel excessifs consistent à démarrer chacun desdits compresseurs **(Cp)** le maintenir à une fréquence de 30 Hz pendant au moins 3 minutes.

12. **Méthode de gestion** d'un système **(S.HP)** selon l'une quelconque des revendications précédentes, **caractérisée en ce que**

a) tous ces **n** compresseurs **Cp** dudit groupe **(Gn)** sont rassemblés dans un ou plusieurs sous-ensembles **(SGn', SGn",...)** comprenant chacun des compresseurs **(Cp)** de type identique ou sensiblement identique,

b) pour chacun desdits sous-ensembles **(SGn', SGn",...)** une même ligne discontinue est déterminée **(sp.SGn)** représentative de la relation entre la fréquence **FR** et le **Oper.ratio** correspondant se produisant pour les mêmes sous-ensembles **(SGn', SGn",...)**,

c) chacun de ces **m** compresseurs **(Cp)**, lorsqu'il est enclenché, pour fournir la valeur souhaitée du **Oper.ratio** est actionné à la fréquence de fonctionnement **FR** déterminée par la ligne discontinue **(sp.SGn)** spécifique pour le sous-ensemble **(SGn', SGn",...)** auquel appartient ledit compresseur **(Cp)**.

13. **Méthode de gestion** d'un système **(S.HP)** selon l'une quelconque des revendications précédentes, **caractérisée en ce que**

au moins lorsque lesdits **m** compresseurs disponibles varient ou si ladite fréquence commune de fonctionnement ou si ladite fréquence commune de fonctionnement **FR.oper** dépasse lesdites limites inférieures d'efficacité maximale commune **FR FR.min.lim.Eff** et limites supérieures d'efficacité maximale **FR FR.max.lim.Eff** les étapes c) et d) de la revendication 1 sont répétées.

14. **Méthode de gestion** d'un système **(S.HP)** selon l'une quelconque des revendications précédentes à partir de 4, **caractérisée en ce que**

si le nombre **n** desdits compresseurs **Cp** est > 2, ledit **Min.turnover.level** est remplacé par une valeur

$$Min.turnover.level.var = Max.turnover.level.\ (n - 1)/n$$

15. **Méthode de gestion** d'un système **(S.HP)** selon l'une quelconque des revendications précédentes, **caractérisée en ce que**

ledit appareil de gestion **(CM)** dudit système **(S.HP)** obtient la valeur de ladite charge **W.req(t)** requise à l'instant **t** par ladite utilité **UT** à partir du produit **W.req(t) = k.UT. T.target(t)** où **k.UT** est une caractéristique constante prédéterminée de l'utilité.

**16. Méthode de gestion** d'un système **(S.HP)** selon toute revendication précédente, excluant 15, **caractérisée en ce que**

d) ledit système **(S.HP)** comprend en outre un débitmètre adapté pour évaluer le débit **G(t)** dudit fluide caloporteur **(Th.v.1 ; Th.v.2)** qui dessert directement l'utilité ;
**et en ce que**
e) une valeur représentative de ladite charge **W.req(t)** à l'instant **t est** fournie par le produit **C.∫G(t).[T.target(t) - T.eff(t)].d**t
f) où **C** et **G(t)** sont respectivement égaux à la capacité thermique et au débit à l'instant **t** dudit entre les fluides caloporteurs **(Th.v.1)** ou **(Th.v.2)** dont ladite température **T.eff(t)** est mesurée.

**17. Méthode de gestion** d'un système **(S.HP)** selon l'une quelconque des revendications précédentes, **caractérisée en ce que**
ledit appareil de gestion **(CM)** dudit système **(S.HP)** connaît la valeur de la puissance de fonctionnement **W.oper** effectivement délivrée par un capteur **(S)** placé au refoulement desdits fluides caloporteurs **(Th.v.1)** ou **(Th.v.2)** qui lui envoie un signal représentatif de la température de refoulement **T.eff(t)**.

**18. Méthode de gestion** d'un système **(S.HP)** selon l'une quelconque des revendications précédentes, **caractérisée en ce que**

ledit système **(S.HP)** comprend en outre un générateur de chaleur composé d'une ou plusieurs chaudières à combustible **WHB** et d'un ou plusieurs éléments électriques **EHE**.
**caractérisé en ce que** les étapes suivantes sont prévues

a. la valeur de l'intégrale **T(t).dt = ∫[T.target(t) - T.eff(t)].dt** est calculée à partir d'un instant initial **t.delay** jusqu'à l'instant présent **t** et est considéré comme représentatif d'un déficit de puissance **W.deficit(t)** entre ladite charge **W.req(t)** requise à l'instant **t** et la puissance totale de sortie desdits **m** compresseurs **W.max.Gm,** où cet instant initial **t.delay** à partir duquel l'écart entre **T.target(t)** et **T.eff(t)** se réduit tardivement ;
b. un ou plusieurs desdits éléments **(WHB; EHE)** s'activent jusqu'à la couverture substantielle de ladite charge **W.req(t)** en donnant la priorité à ceux desdits éléments **(WHB, EHE)** qui couvrent la plus grande partie du déficit de puissance **W.deficit(t)**
c. comme alternative au point (b), la priorité est donnée aux générateurs alimentés par des sources d'énergie qui sont actuellement moins chères.

**19. Méthode de gestion** d'un système **(S.HP)** selon l'une quelconque des revendications précédentes, et **caractérisée en ce que**

ledit système **(S.HP)** comprend en outre

- corps **WH** appartenant aux utilités **UT.ult** non liées à ladite utilité **UT**
- et une ou plusieurs de ces pompes à chaleur **HP** est une pompe à chaleur **(HPwh)** dédiée, sur demande, uniquement au chauffage de ces autres utilités **UT.ult**

**et en ce que**
ceux parmi lesdits compresseurs **Cp** compris dans lesdites pompes à chaleur **(HPwh)** sont déclarés indisponibles pour l'utilité **UT.ult**, alors qu'ils sont dédiés aux autres utilités **UT**.

**20. Méthode de gestion** d'un système **(S.HP)** selon l'une quelconque des revendications précédentes à partir de 12, **caractérisée en ce que**
chacun de ces sous-ensembles **(SGn', SGn",...)** est affecté à une fraction fixe de ladite puissance **W.req(t)** à produire.

**21. Méthode de gestion** d'un système **(S.HP)** selon la revendication précédente, **caractérisée en ce que**
lesdites fractions affectées auxdits sous-ensembles **(SGn', SGn",...)** sont proportionnelles aux puissances maximales délivrées par chacun d'eux.

**22. Méthode de gestion** d'un système **(S.HP)** selon les revendications 11 à 18

**caractérisée en ce que**

- une hiérarchie desdits sous-ensembles **(SGn'**, **SGn"**,...) est établie, du plus puissant au moins puissant
- le plus puissant de ces sous-ensembles **(SGn', SGn"**,...) est amené à une fréquence **FR** aussi proche que possible de sa fréquence d'efficacité maximale **FR.max.Eff.Gn** qui correspond à une fraction correspondante de la puissance assurée du total **W.req(t)** à fournir et le quota résiduel de puissance à assurer est enregistré,
- les sous-ensembles suivants **(SGn'**, **SGn"**,...) sont soumis au même critère, en attribuant à chaque sous-ensemble suivant **(SGn'**, **SGn"**,...) dans la hiérarchie, la fréquence de fonctionnement **FR** la plus proche possible de sa **FR.max.Eff.Gn** et en enregistrant à nouveau la puissance résiduelle à assurer jusqu'à l'attribution de la dernière puissance résiduelle au dernier de ces sous-ensembles **(SGn', SGn"**...)

FR [Hz]

$\eta$isoentr

140

0,65

FR.max.oper 118 — 120

0,60

V4

100

0,55

80

Sp.k

FR.max.lim.Eff 70 —

0,50

FR.max.Eff 60 —

V3

FR.min.lim.Eff 50 —

V2

40

Cu.k

V1

20 W MIN   W INT   W MAX

FR.min.oper 18 —

0

0   20   30   40   50   60   70   80   100 [%]

Min.   Max.
.turnover.level   .turnover.level

Opt.output.power

operative     just the smallest   all those        all available
compressors:  one                 determined by CM

$$\text{Oper.ratio}[\%]=$$
$$=\text{W.oper.k}/\text{W.max.k}=$$
$$=\text{W.tot(t)}/\text{W.max.k}$$

**Fig. 1**

$\eta$isoentr

0,65

0,60

0,55

0,50

0   30   40   50   60   70   80   100   120   FR [Hz]

**Fig. 3**

Fig. 2

Fig. 4

Fig. 5

Fig. 6

Fig. 7

Temp

CM_PID_TArget

T.target

T.eff(t)

Integral

Common Flow
Sens T10

$t_0$　　　　CM_REQUIRED_PW at Max　$t_{delay}$　　　　$t$

## Fig. 8

kW

55
50
45
40
35
30
25
20
15
10
5

HE3.3 49
HE3.2 47
HE3.1 45
HE1.3 43
HE1.2 40
HE1.1 37
HE2.3 34
HE2.2 32
HE2.1 30

Lower
Priority

Heating
elements

EHE

28

Boiler kW Size + AUX source kW Size

AUX

Boiler 1 kW Size 18

Boiler

EHE

Integration Boilers Min kW 2

$t_{delay}$　　　　　　　　　　　　　$t$

## Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013231542 A